(19) **Europäisches Patentamt / European Patent Office / Office européen des brevets**

(11) **EP 4 687 094 A1**

(12) **EUROPEAN PATENT APPLICATION**

(43) Date of publication:
**04.02.2026 Bulletin 2026/06**

(21) Application number: **24382851.4**

(22) Date of filing: **31.07.2024**

(51) International Patent Classification (IPC):
**G06T 3/4038** (2024.01)     **G06T 3/4053** (2024.01)
**G06T 5/50** (2006.01)

(52) Cooperative Patent Classification (CPC):
**G06T 3/4038; G06T 3/4053; G06T 5/50;**
G06T 2207/10032; G06T 2207/20221

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Satlantis Microsats, S.A.**
**48940 Leioa, Vizcaya (ES)**

(72) Inventors:
• **SALAVERRIA JIMENEZ, Iñaki**
  **48940 Leioa, Bizkaia (ES)**

• **PEREZ GARCIA, Natalia**
  **48940 Leioa, Bizkaia (ES)**
• **MARIÑO CALZADA, Fernando**
  **48940 Leioa, Bizkaia (ES)**
• **CORRES MENDIZABAL, Begoña**
  **48940 Leioa, Bizkaia (ES)**
• **DÍAZ RODRÍGUEZ, Mikel**
  **48940 Leioa, Bizkaia (ES)**

(74) Representative: **ABG Intellectual Property Law, S.L.**
**Avenida de Burgos, 16D**
**Edificio Euromor**
**28036 Madrid (ES)**

(54) **METHOD AND SYSTEM FOR PROCESSING SATELLITE IMAGES**

(57)    The present invention relates to a method and to a system for processing satellite images. In particular, the method and the system for processing images allow an image to be obtained with super resolution by means of fusing a plurality of satellite images acquired in different time instants by a sensor on board an orbiting satellite.

**Fig.1**

EP 4 687 094 A1

**Description**

## OBJECT OF THE INVENTION

The present invention relates to a method and to a system for processing satellite images. In particular, the method and the system for processing images allow an image to be obtained with super resolution by means of fusing a plurality of satellite images acquired in different time instants by a sensor on board an orbiting satellite.

## BACKGROUND OF THE INVENTION

A satellite image can be defined as the visual representation of the surface of the Earth or of any other celestial body captured by a sensor mounted in an orbiting artificial satellite.

Satellite images have a wide variety of applications, such as climate studies, natural disaster monitoring, natural resource exploration, urban planning, the study and exploration of celestial bodies, or military monitoring.

Artificial satellites typically have sensors to collect the information reflected from the surfaces of celestial bodies and, once they receive this information, they send it to receiving equipment on Earth, where it is duly processed to obtain satellite images.

Satellite images can be captured in many different types of resolution, such as spatial, spectral, temporal, radiometric, or geometric resolution. In particular, spatial resolution refers to the pixel size in the satellite image that represents a part of the surface of the celestial body.

High spatial resolution images allow working with detailed scales, but to obtain such high-resolution images, a high computational cost is required. This implies the need for specialized and advanced hardware and software in the receiving equipment.

The technical resources currently available on board a satellite are insufficient to process the raw images acquired by the sensors and to obtain high-resolution satellite images. To achieve this goal, more specialized and advanced hardware would be needed, but the limitations of weight and space on the satellite make it impossible to provide these resources on board.

Therefore, there is a need for a method for processing satellite images that can be executed by a system with limited hardware, such as that which may exist on board a satellite. In this way, it would not be necessary to send the information acquired by the sensors on board the satellite to a receiver on Earth for processing, but the images would already be sent processed in real time to the receiver on Earth after their acquisition by the sensor.

## DESCRIPTION OF THE INVENTION

The present invention proposes a solution for the aforementioned problems by means of a computer-implemented method for processing satellite images according to claim 1, a system for processing satellite images according to claim 11, a camera for observing celestial bodies according to claim 14, and a satellite according to claim 15. Preferred embodiments of the invention are defined in the dependent claims.

A first inventive aspect provides a computer-implemented method for processing satellite images, the method comprising the steps of:

(a) receiving a plurality of satellite images acquired by a sensor on board a satellite and telemetry data, the telemetry data comprising a plurality of positions and attitudes of the satellite with respect to an inertial reference system centered on a celestial body in a plurality of telemetry time instants;

(b) aligning a pair of consecutive satellite images of the plurality of satellite images by carrying out the following substeps:

(b.1) selecting a first satellite image and a second satellite image to be aligned,
(b.2) calculating an initial horizontal displacement and an initial vertical displacement of the second satellite image with respect to the first satellite image by:

- estimating a first time instant in which the sensor acquired the first satellite image from the telemetry data;
- estimating the position and attitude of the satellite in the first time instant estimated from the telemetry data;
- estimating a second time instant in which the sensor acquired the second satellite image from the telemetry data;
- estimating the position and attitude of the satellite in the second time instant estimated from the telemetry data;
- calculating the initial horizontal displacement and the initial vertical displacement from the positions and attitudes of the satellite in the first time instant and in the second time instant;

(b.3) based on the initial horizontal displacement and the initial vertical displacement, calculating the total horizontal displacement and the total vertical displacement that must be applied to the second satellite image to minimize the distance between said second satellite image and the first satellite image, with the distance being measured according to a first preset norm, preferably the Euclidean norm;
(b.4) aligning the first satellite image and the second satellite image by applying the total horizontal displacement and the total vertical displacement to the second satellite image;

(c) repeating step (b) for all the pairs of consecutive satellite images of the plurality of satellite images, wherein in each iteration of step (b):

- the first satellite image selected in sub-step (b.1) corresponds with the second satellite image of the previous iteration;
- the total horizontal displacement obtained in sub-step (b.3) of the previous iteration must be added to the total horizontal displacement obtained in sub-step (b.3); and
- the total vertical displacement obtained in sub-step (b.3) of the previous iteration must be added to the total vertical displacement obtained in sub-step (b.3);

(d) selecting the first satellite image selected in sub-step (b.1) of the first iteration of step (b) as the reference image, and
obtaining at least one common region between the reference image and each of the second satellite images displaced in sub-step (b.4) of all the iterations of step (b), resulting in a set of common regions;
(e) obtaining an oversampled fused image by fusing the reference image and the set of common regions by carrying out the following sub-steps:

(e.1) generating an oversampled image, wherein the resolution of the oversampled image is the resolution of the reference image multiplied by a predefined oversampling factor;
(e.2) for each pixel of the oversampled image, determining the distance from the center of said pixel to the center of at least one pixel of each region of the set of regions and to the center of at least one pixel of the reference image, wherein the distance is measured according to a second preset norm, preferably the Euclidean norm;
(e.3) for each pixel of the oversampled image, estimating a weight for the at least one pixel of each region of the set of regions and for the at least one pixel of the reference image based on the determined distances; and
(e.4) obtaining the oversampled fused image, wherein the value of each pixel of the oversampled fused image is the sum of the values of the at least one pixel of each region of the set of regions and of the at least one pixel of the reference image weighted based on the weights estimated in the preceding sub-step.

Firstly, the method requires receiving two or more satellite images acquired by a sensor on board a satellite and the telemetry data acquired during acquisition of the satellite images.

Throughout the document, telemetry data will be understood to comprise a plurality of positions and attitudes of the satellite determined in a plurality of time instants.

In one embodiment, the telemetry data, such as the attitude of the satellite, is determined by means of one or more of the following devices on board the satellite: star trackers, sun sensors, or magnetometers.

Throughout the document, attitude of a satellite will be understood to mean how said satellite is oriented or pointing with respect to an inertial reference system centered on a celestial body.

Throughout the document, inertial reference system will be understood to mean that with respect to which an element is positioned and oriented in relation to a celestial body, the inertial reference system being centered on the celestial body, with its origin being in the center of mass of said celestial body.

Throughout the document, celestial body will be understood to mean any natural object located in outer space. Examples of celestial bodies are planets, such as Earth; natural satellites, such as the Moon; or stars.

Next, the images are aligned in consecutive pairs; for example, by putting the first satellite image in register with the second, the second with the third, and so on and so forth until reaching the last satellite image of the plurality of satellite images.

Throughout this document, aligning two two-dimensional satellite images will be understood to involve finding the displacement of one with respect to the other on the horizontal and vertical axes which minimizes the distance between the two images. Throughout the document, distances are measured by means of one or more preset norms, preferably by means of the Euclidean norm.

The sub-steps of aligning images according to the invention are implemented so that they can be executed with hardware with a limited processing capacity, such as that which may be found on board a satellite.

To that end, the method of alignment is based on a prior calculation of horizontal and vertical displacements from the telemetry data received; i.e., the alignment of each pair of consecutive images does not start from zero, but rather from a first estimate that takes into account how much the sensor in the satellite has been displaced between the acquisition of the first image of the pair to be aligned and the acquisition of the second image of the pair to be aligned. The execution times for aligning images is thereby greatly reduced, so the technical requirements of the system in charge of alignment are lower and, therefore, this step of the method can be carried out with the hardware present in a satellite.

In particular, the alignment of images (step b) requires the execution of the following sub-steps.

The first step of aligning, sub-step (b.1), requires selecting a pair of images from the plurality of satellite images: a first satellite image and a second satellite image.

Next, in step (b.2), an initial horizontal displacement and an initial vertical displacement to be applied in the second satellite image with respect to the first satellite image are calculated. Said initial displacements are the basis for the method of alignment as such.

To calculate the initial horizontal and vertical displacements, firstly, the time instants in which the sensor acquired the satellite images to be aligned must be estimated. Likewise, the position and attitude of the satellite in the estimated time instants, that is, the position and attitude that the satellite had when the sensor acquired the images to be aligned, must be estimated. This estimate is performed from the telemetry data.

In one embodiment, to estimate these time instants, as well as the positions and attitudes of the satellite, it is necessary to perform an interpolation of the telemetry data previously received. In general, the speed at which the images are received is considerably higher than the speed at which the telemetry data is received. For example, the sensor can take 50 images per second, while the position and attitude data of the satellite, together with the acquisition time instant, are received with a mean frequency of 4 Hz, which can reach a total of 10 Hz. Therefore, for the satellite images to be aligned, the position and attitude of the satellite, as well as the acquisition time instant, can be estimated by interpolating the telemetry data received.

Once the time instants and attitudes and positions of the satellite are known, the method continues by calculating the initial horizontal and vertical displacements from the variations in positions and attitudes of the satellite between the two estimated time instants.

The method continues in sub-step (b.3), where based on the initial horizontal displacement and the initial vertical displacement, the total horizontal displacement and the total vertical displacement that must be applied to the second satellite image to minimize the distance between said second satellite image and the first satellite image are calculated. As mentioned above, the distance is measured according to a first preset norm, preferably the Euclidean norm.

To end the alignment, in sub-step (b.4), the first satellite image and the second satellite image are aligned by applying the total horizontal displacement and the total vertical displacement obtained in sub-step (b.3) to the second satellite image.

Next, step (c) of the method is executed. In this step, the alignment defined in step (b) must be repeated for all the pairs of consecutive images of the plurality of satellite images.

In each new iteration of step (b), the satellite image selected in sub-step (b.1) as the first satellite image must correspond with the second satellite image selected in sub-step (b.1) of the previous iteration of step (b). Therefore, if in the first iteration of step (b) the second satellite image has been aligned with respect to the first satellite image, in the second iteration of step (b) the third satellite image will be aligned with respect to the second satellite image, and so on and so forth until the last satellite image of the plurality of satellite images is aligned with respect to the next-to-last satellite image of the plurality of satellite images.

Additionally, in each iteration of step (b) different from the first iteration, the horizontal displacement obtained in sub-step (b.3) of the previous iteration must be added to the horizontal displacement obtained in sub-step (b.3). Likewise, in each iteration of step (b) different from the first iteration, the vertical displacement obtained in sub-step (b.3) of the previous iteration must be added to the vertical displacement obtained in sub-step (b.3). All the images are thereby aligned with respect to the image selected as the first satellite image in the first iteration of step (b) of the method.

For example, if the alignment of the second image of the plurality of satellite images with respect to the first image of said plurality results in a horizontal displacement X and a vertical displacement Y; and the alignment of the third image of the plurality of satellite images with respect to the second image results in a horizontal displacement X' and a vertical displacement Y', then the total horizontal displacement calculated in step (b.3) of the second iteration of step (b) will be X+X' and the total vertical displacement calculated in step (b.3) of the second iteration of step (b) will be Y+Y'. Therefore, both the second image and the third image would be registered with respect to the first image of the plurality of satellite images.

Once the alignment of all the pairs of images of the plurality of satellite images has been carried out, the method continues with the execution of step (d). In this step, firstly, the first satellite image that was selected in sub-step (b.1) of the first iteration of step (b) is selected as the reference image, i.e., that satellite image with respect to which the rest of the satellite images have been aligned after performing the full chain of alignments of pairs of images.

Taking into account said reference image, step (d) of the method requires obtaining a common region between the reference image and each of the second satellite images displaced in sub-step (b.4) of all the iterations of step (b), resulting in a set of common regions.

To that end, one of the second displaced satellite images is compared with the reference image to find at least one common region between both. At least one common region for the second displaced satellite image, which will contain the pixels of the common region matching the pixels of the reference image, is thereby selected.

This way of obtaining reference regions is repeated for each second displaced satellite image in sub-step (b.4) of each iteration of step (b), therefore obtaining a set of common regions (at least one for each second displaced satellite image).

The method ends with obtaining a fused image with super resolution by means of fusing the reference image and the set of common regions. This fusion requires performing several sub-steps:

Firstly, in sub-step (e.1), an oversampled image with a resolution equal to that of the reference image multiplied by a predefined oversampling factor is generated. This oversampled image, for example, can be an image in which all the pixels have a predetermined value, such as zero or one.

Next (sub-step e.2), for each pixel of the oversampled image, the distance from its center to the center of one or more pixels of the images to be fused (common regions and reference image) is determined. In particular, once the images to be fused are positioned, the distances from the center of a pixel of the oversampled image to the centers of one or more pixels of each common region and to the centers of one or more pixels of the reference image are calculated. The distance is calculated according to a preset norm, preferably the Euclidean norm.

In one embodiment, once the images to be fused are positioned, the distances from the center of a pixel of the oversampled image to the centers of one or more pixels of each common region which coincide with and/or are adjacent to or contiguous with the pixel of the oversampled image and to the centers of the pixels of the reference image which coincide with and/or are adjacent to or contiguous with the pixel of the oversampled image are calculated.

This action is repeated for all the pixels of the oversampled image.

The method continues in sub-step (e.3) by estimating, for each pixel of the oversampled image, a weight for each of the pixels of the set of common regions and of the reference image for which distances with respect to the pixel of the oversampled image have been calculated. This weight depends on the determined distance; for example, the smaller the calculated distance is, the greater the weight estimated for that pixel of the set of common regions or of the reference image is.

To end, the method obtains an oversampled fused image in step (e.4). This oversampled fused image is based on the oversampled image, in which the value of each pixel is replaced with the sum of the values of the pixels of the set of common regions and of the reference image for which the distance with respect to said pixel of the oversampled image has been calculated, but weighted based on the weights that were estimated in step (e.3).

As a result of this method, an image with super resolution is obtained from a set of satellite images with a lower resolution by using a hardware with a limited processing capacity, such as that which may be found on board a satellite.

The image fusion that gives rise to the image with super resolution requires a prior alignment of the original satellite images, which is a computationally costly operation. However, with the method of the invention, the alignment is based on a prior estimate of the horizontal and vertical displacements to be applied in one image with respect to the other, wherein said estimate is performed from the telemetry data. Since the alignment of images does not start from zero, but rather is a mere adjustment of the initial displacements, computational calculations are greatly streamlined, which translates into a lower computational capacity requirement for the hardware and, therefore, enables method to be executed in a system on board a satellite.

In one embodiment, in step (b.3), the displacement is determined by minimizing a linear cross-correlation between the first satellite image and the second satellite image.

In a particular embodiment, in sub-step (b.2), the calculation of the initial horizontal displacement and the initial vertical displacement from the positions and attitudes of the satellite in the first time instant and in the second time instant is performed by means of the following sub-steps:

(1) in the first iteration of step (b), for each pair of consecutive telemetry time instants, $t_{tel1}$ and $t_{tel2}$, of the telemetry data:

- calculating the pointing vectors of the pixel at the center of the sensor and of at least two pixels of two segments of the sensor, which are perpendicular to one another and intersect at the center of the sensor, with respect to the inertial reference system from the position and attitude of the satellite in the first telemetry time instant, $t_{tel1}$, and in the second telemetry time instant, $t_{tel2}$;
- obtaining the projection of the pixel at the center of the sensor and of the at least two pixels of the segments of the sensor on the surface of the celestial body by calculating the intersection of the pointing vectors of said pixels with a reference geometric shape of a representative geodesic model of the celestial body;

- defining a projected reference system as the projection of the at least two pixels of the segments of the sensor and the projection of the pixel at the center of the sensor on the surface of the celestial body assuming that:

  ○ the surface of the celestial body is flat;
  ○ the projected reference system is an orthogonal reference system made up of the projections of the pixels of the segments of the sensor and the projection of the pixel at the center of the sensor; and
  ○ the projection of the pixel at the center of the sensor is the center of the projected reference system;

- for the pixel at the center of the sensor:

  calculating the effective height as the modulus of its pointing vector, wherein the terminal point of the pointing vector is its intersection with the surface of the celestial body, and
  calculating the ground sampling distance, GSD, which represents the size of the projection of the pixel at the center of the sensor on the surface of the celestial body:

$$GSD = effective\ height \cdot \frac{pixel\ size\ of\ sensor}{focal\ length\ of\ sensor}$$

- calculating a first linear velocity, $\vec{v_1}$, of the projection of the pixel at the center of the sensor due to the rotation of the celestial body, wherein

  the first linear velocity $\vec{v_1}$ is referenced in the inertial reference system, and
  the first linear velocity $\vec{v_1}$ is calculated from the angular velocity, $\vec{\omega}$, of the celestial body and from the perpendicular distance from the projection of the pixel at the center of the sensor to the axis of rotation of the celestial body, $\vec{R}$:

$$\vec{v_1} = \vec{\omega}\ x\ \vec{R}$$

  where $\vec{\omega}$ and $\vec{R}$ are vectors referenced in the inertial reference system;

  - calculating a second linear velocity, $\vec{v_2}$, of the projection of the pixel at the center of the sensor due to the movement of the satellite:

$$\vec{v_2} = \frac{\overrightarrow{pos_2} - \overrightarrow{pos_1}}{t_{tel2} - t_{tel1}}$$

    where:

      ○ $\overrightarrow{pos_2}$ is the position vector of the projection of the pixel at the center of the sensor in the second telemetry time instant, $t_{tel2}$, the vector being referenced in the inertial reference system; and
      ○ $\overrightarrow{pos_1}$ is the position vector of the projection of the pixel at the center of the sensor in the first telemetry time instant, $t_{tel1}$, the vector being referenced in the inertial reference system; and
      ○ $\vec{v_2}$ is referenced in the inertial reference system;

  - calculating the total linear velocity, $\vec{v_T}$, of the projection of the pixel at the center of the sensor in pixels per second:

$$\vec{v_T} = \frac{\vec{v_1} + \vec{v_2}}{GSD}$$

  - referencing the total linear velocity $\vec{v_T}$ obtained in the preceding sub-step in the projected reference system;

(2) in the first iteration of step (b), calculating the horizontal linear velocity, $v_H(t)$, and vertical linear velocity, $v_V(t)$, as a function of time by interpolating the horizontal and vertical components of the total linear velocities, $\vec{v_T}$, obtained for all the pairs of consecutive telemetry time instants; and

(3) in any iteration of step (b), for the pair of consecutive satellite images to be aligned, estimating the initial horizontal displacement and the initial vertical displacement by integrating the horizontal and vertical linear velocities as a function of time, $v_H(t)$ and $v_V(t)$, respectively, between the first time instant and the second time instant.

This embodiment describes in detail a way of calculating the initial horizontal displacement and the initial vertical displacement from the telemetry data, in particular, from the positions and attitudes of the satellite in the first time instant and in the second time instant that were estimated in sub-step (b.2) of the method.

In steps (1) and (2) of this embodiment, the horizontal and vertical velocities are estimated based on the time of the projection of the sensor on the surface of the celestial body taking into account all the telemetry data, that is, the plurality of telemetry time instants and the corresponding positions and attitudes of the satellite in said telemetry time instants. Said steps (1) and (2) must be performed only once during execution of the method, that is, in the first iteration of step (b).

Once the horizontal and vertical velocities based on time are available, in step (3) of this embodiment, the initial horizontal and vertical displacements that would have to be applied to a second satellite image to align it with a first satellite image are estimated. This step must be performed in any iteration of step (b), such that different initial horizontal and vertical displacements are calculated for each pair of images to be aligned in each iteration of step (b).

During step (1) of this embodiment, for each pair of consecutive telemetry time instants, $t_{tel1}$ and $t_{tel2}$, of the telemetry data, the pointing vectors of the pixel at the center of the sensor and of at least two pixels of two segments of the sensor which intersect at the center of the sensor and which are perpendicular are calculated. In particular, for each telemetry time instant, $t_{tel1}$ and $t_{tel2}$, the positions and attitudes of the satellite are identified according to the telemetry data, and by knowing said positions and attitudes of the satellite, the pointing vectors are calculated.

Preferably, the two pixels of the segments belong to the ends of the sensor, that is, to the set of pixels of the sensor delimiting it above, below, on the left, and on the right, for example, a pixel of the upper end of the sensor and a pixel of the right-side end of the sensor.

Throughout the document, pointing vector of a pixel of the sensor will be understood to mean that vector with its origin at the center of the pixel, which is directed according to the optical direction of the pixel, which intersects the surface of the celestial body at a given point, and which is referenced in the inertial reference system.

The next step is to obtain the projection of the pixel at the center of the sensor and of the pixels of the segments on the surface of the celestial body. To that end, the intersection of each pointing vector with a reference geometric shape of a representative geodesic model of the celestial body is calculated. For example, the WGS 84 reference ellipsoid if the celestial body is the Earth, with said ellipsoid belonging to a known geodesic model.

From the projections of the pixels of the segments and the projection of the pixel at the center of the sensor, a projected reference system is defined assuming that the surface of the celestial body is flat, that the projected reference system made up of the projections of the pixels of the segments and the projection of the central pixel is orthogonal, and that the projection of the pixel at the center of the sensor is the center of the projected reference system.

In this point, it must be taken into account that, due to the curvature of some celestial bodies, such as the Earth, and due to the pointing of the satellite, the reference system made up of the projections of the segments intersect at the center of the sensor and the projection of the pixel at the center of the sensor is distorted and is not orthogonal. However, in the context of the definition of the projected reference system, these errors are negligible, so the hypotheses that the surface of the celestial body is flat and that the reference system is orthogonal, with its center being the projection of the pixel at the center of the sensor, are assumed.

Next, for the pixel at the center of the sensor, the effective height is calculated as the modulus of its pointing vector, understanding that the terminal point of the pointing vector corresponds with the intersection of said pointing vector with the surface of the celestial body.

Throughout the document, effective height of a pixel will be understood to mean the distance between the pixel of the sensor on board the satellite and its projection on the surface of the celestial body.

Additionally, the ground sampling distance, GSD, which represents the size of the projection of said pixel of the center of the sensor on the surface of the celestial body, is calculated by means of the following expression:

$$GSD = effective\ height \cdot \frac{pixel\ size\ of\ sensor}{focal\ length\ of\ sensor}$$

The pixel size of the sensor and the focal length of the sensor are known commercial parameters that depend on the type of sensor analyzed.

The method continues by calculating a first linear velocity, $\vec{v_1}$, of the projection of the pixel at the center of the sensor resulting from the rotation itself of the celestial body. This velocity is referenced in the inertial reference system and is calculated from the angular velocity, $\vec{\omega}$, of the celestial body and from the perpendicular distance from the projection of the pixel at the center of the sensor to the axis of rotation of the celestial body, $\vec{R}$:

$$\vec{v_1} = \vec{\omega} \times \vec{R}$$

where $\vec{\omega}$ and $\vec{R}$ are vectors referenced in the inertial reference system. For example, the angular velocity of the Earth is 7.27 $\times 10^{-5}$ rad/s and the perpendicular distance from the projection of the pixel at the center of the sensor to the axis of rotation of the Earth is 6,378 kilometers in the Earth's equator.

The next step of the method consists of calculating a second linear velocity, $\vec{v_2}$, of the projection of the pixel at the center of the sensor due to the movement of the satellite in which said sensor is on-board:

$$\vec{v_2} = \frac{\overrightarrow{pos_2} - \overrightarrow{pos_1}}{t_{tel2} - t_{tel1}}$$

$\overrightarrow{pos_2}$ and $\overrightarrow{pos_1}$ are the position vectors of the projections of the pixel at the center of the sensor in the second telemetry time instant, $t_{tel2}$, and in the first telemetry time instant, $t_{tel1}$.

Finally, the total linear velocity, $\vec{v_T}$, of the projection of the pixel at the center of the sensor, converted to pixels per second by using the GSD, is calculated:

$$\vec{v_T} = \frac{\vec{v_1} + \vec{v_2}}{GSD}$$

This total linear velocity $\vec{v_T}$ is referenced in the inertial reference system, and said reference must be modified for the projected reference system, for example, by projecting the horizontal and vertical components of the total linear velocity on the projected reference system.

This step (1) of the method must be executed for each pair of telemetry time instants, therefore obtaining a plurality of total linear velocities. In other words, the method requires a first calculation of the total linear velocity from the telemetry time instants one and two of the telemetry data, a second calculation of total linear velocity from the telemetry time instants two and three of the telemetry data, and so on and so forth until a last calculation of total linear velocity from the next-to-last and last telemetry time instants.

In step (2) of this embodiment, the total linear velocity is calculated based on the time in the horizontal and vertical axes, that is, the horizontal linear velocity, $v_H(t)$, and vertical linear velocity, $v_V(t)$. To that end, the horizontal and vertical components of the plurality of total linear velocities, $\vec{v_T}$, obtained in step (1) for all the pairs of consecutive telemetry time instants are interpolated.

Finally, in step (3), for the pair of consecutive satellite images to be aligned and acquired in a first time instant and in a second time instant, the method estimates the initial horizontal displacement and the initial vertical displacement by integrating the horizontal and vertical linear velocities as a function of time, $v_H(t)$ and $v_V(t)$, respectively, between the first time instant and the second time instant.

Advantageously, in this embodiment all the telemetry data as well as the rotation of the celestial body are taken into account to very precisely estimate the initial horizontal and vertical displacements that must be applied to the second satellite image to align it with respect to the first satellite image. The more precise this estimate is, the more quickly the alignment of images is performed and the fewer computational resources the alignment operation requires, which translates into the viability of executing the method by means of the hardware available on board a satellite.

In a particular embodiment, sub-step (b.3) is carried out by means of the following sub-steps:

(b.3.i) for the first satellite image, generating a first image pyramid by subsampling the first satellite image with N predefined subsampling factors, where N is greater than or equal to one, wherein the first image pyramid comprises N+1 levels, and wherein:

- the first level of the first image pyramid comprises the first satellite image, and
- the i-th level of the first image pyramid comprises an image subsampled from the first satellite image with the k-th subsampling factor, where i = 2,...,N+1 and k = i-1;

(b.3.ii) for the second satellite image, generating a second image pyramid by subsampling the second satellite image with M predefined subsampling factors, where M is greater than or equal to one, wherein the second image pyramid comprises M+1 levels, and wherein:

- M is less than or equal to N,
- the first level of the second image pyramid comprises the second satellite image, and

- the j-th level of the second image pyramid comprises an image subsampled from the second satellite image with the m-th subsampling factor, where j = 2,... ,M+1 and m = j-1;

(b.3.iii) based on the initial horizontal displacement and the initial vertical displacement, determining the horizontal displacement and the vertical displacement that must be applied to the image of the M+1 level of the second image pyramid to minimize the distance between said image and the image of the first image pyramid of the same level, with the distance being measured according to a third preset norm, preferably the Euclidean norm;
(b.3.iv) based on the horizontal displacement and the vertical displacement determined in the preceding sub-step, determining the horizontal displacement and the vertical displacement that must be applied to the image of the lower level of the second image pyramid to minimize the distance between said image and the image of the first image pyramid of the same level, with the distance being measured according to the third preset norm, and wherein:

- if said lower level is level 1 of the second image pyramid, establishing the horizontal displacement as total horizontal displacement and the vertical displacement as total vertical displacement; or
- if said lower level is not level 1 of the second image pyramid, repeating step (b.3.iv).

This embodiment describes a particular way of aligning the satellite images in an efficient manner in terms of execution time.

As has already been mentioned, the sub-steps of aligning images according to the invention are implemented so that they can be executed with hardware with a limited processing capacity, such as that which may be found on board a satellite. To that end, this embodiment seeks to align the images based on versions thereof with a lower resolution than the original, such that the calculation times required can be handled by said hardware with limited processing capacity.

Firstly (sub-step b.3.i), a first image pyramid with N+1 levels is generated. The first level of the pyramid comprises the first satellite image, which is subsampled with one or more predefined subsampling factors to generate the images of the rest of the levels of the first image pyramid.

The higher the level of the pyramid is, the greater the subsampling factor used to generate the subsampled image comprised in said level is.

Throughout the document, subsampling an image will be understood to mean reducing its spatial resolution by combining sets of pixels according to a subsampling factor. For example, subsampling an image with a subsampling factor equal to 2 means combining 2 horizontal pixels and 2 vertical pixels that are adjacent to one another to generate a single pixel in the subsampled image.

The method continues in step (b.3.ii) by generating a second image pyramid of M+1 levels from the second satellite image.

The first level of the second pyramid comprises the second satellite image itself, which is subsampled with one or more subsampling factors to generate the images of the rest of the levels of the pyramid.

The higher the level of the pyramid is, the greater the subsampling factor used to generate the subsampled image comprised in said level is.

The number of levels of the second image pyramid can be equal to or less than the number of levels of the first image pyramid.

In the next step of the method, sub-step (b.3.iii), an alignment between the image with a lower resolution of the second image pyramid (i.e., the image of the M+1 level of the second image pyramid) and the image of the first image pyramid with the same resolution (i.e., the image of the M+1 level of the first image pyramid) is carried out. This alignment is based on the initial horizontal and vertical displacements estimated from telemetry data.

The result of this alignment comprises the horizontal displacement and the vertical displacement that must be applied to the satellite image with a lower resolution of the second pyramid for the distance between it and the image with a lower resolution of the first pyramid to be minimum. As discussed above, the distance is measured according to a preset norm, preferably the Euclidean norm.

Next, the alignment of the images of the rest of the levels of the pyramids in step (b.3.iv) is carried out sequentially. In that sense, an alignment between the image of level M of the second pyramid and the image of level M of the first pyramid is performed. This alignment is based on the horizontal and vertical displacements determined for the images of the higher level, such that the process is greatly streamlined, requiring less calculation time and fewer computational resources.

In that sense, the result of this alignment of sub-step (b.3.iv) comprises the horizontal displacement and the vertical displacement that must be applied to the image of level M of the second pyramid for the distance between it and the image of level M of the first pyramid to be minimum.

Next, the method evaluates if the last alignment carried out corresponds to the alignment of the images of the first level of the pyramids (that is, of the first and of the second image pyramids):

- If the last register has been carried out on the images of level 1 of the pyramids, the horizontal displacement determined in the last iteration of step (b.3.iv) is established as total horizontal displacement and the vertical displacement determined in the last iteration of step (b.3.iv) is established as total vertical displacement; and the method continues in step (b.4); or

- Otherwise, step (b.3.iv) is repeated sequentially until carrying out the alignment of the images of level 1 of the pyramids, at which time the method continues in step (b.3.iv).

It should be noted that, in each iteration of step (b.3.iv), the alignment is performed on the images comprised in the level of the pyramids immediately below the level on which the last alignment has been carried out, with the alignment further being based on the result (horizontal and vertical displacements) determined for the last alignment; for example, if in the last iteration of step (b.3.iv) the alignment was performed on the images of level M of the pyramids, in the next iteration the alignment must be performed on the images of level M-1 taking into account the result of the alignment of the images of level M, and so on and so forth.

In one embodiment, for all the iterations of step (b) different from the first, sub-step (b.3.i) of generating a first image pyramid of the first satellite image of the pair to be registered is omitted, since this first image pyramid corresponds with the second image pyramid generated in the previous iteration.

As has already been discussed, the image fusion that gives rise to the image with super resolution requires a prior alignment of the original satellite images, which is a computationally costly operation. However, as a result of this embodiment, the alignment is based on subsampled images, which streamlines the computational cost of this action, and the result of said alignment is used as a starting point for subsequent alignments of the images with more resolution in the pyramids generated, which greatly streamlines the computational calculations of said subsequent alignments.

In one embodiment, in steps (b.3.iii) and (b.3.iv), the horizontal and vertical displacements are determined by minimizing a linear cross-correlation between the first satellite image and the second satellite image of the corresponding levels of the pyramids.

In a particular embodiment:

- in the first iteration of step (b), the number of levels of the first image pyramid is equal to the number of levels of the second image pyramid; and
- in the rest of the iterations of step (b), the number of levels of the rest of the image pyramids is less than the number of levels of the image pyramids generated in the first iteration.

In this embodiment, the number of levels of the first image pyramid and the second image pyramid generated in the first iteration of step (b) is the same. For the rest of the iterations of step (b), the number of levels of the pyramids generated is less than the number of the first iteration, for the purpose of streamlining the computational cost of the alignment. In a particular embodiment, the method further comprises a step prior to step (b) of correcting the plurality of satellite images.

In this embodiment, prior to registering the images, said images may undergo at least one correction process, for example, the elimination of fixed and/or variable noise, the offsetting of the non-uniform effect on the light of the sensor, an optical correction, and/or a geometric correction.

Advantageously, the corrected images are of better quality than the original or raw images, such that the image with super resolution obtained by means of the complete execution of the method has a higher quality.

In a particular embodiment, the method comprises a step prior to step (b) of eliminating fixed noise in the plurality of satellite images, the step of eliminating fixed noise being carried out by means of the following sub-steps:

- determining a dark image by averaging a plurality of images acquired by the sensor in the absence of illumination; and
- extracting the dark image from each of the satellite images.

In this embodiment, the step of correcting of the method comprises eliminating the fixed noise in the raw satellite images.

Throughout the document, fixed noise will be understood to be a pattern of interference or distortion that consistently appears in all the satellite images captured by the same sensor. This is due to the sensor's dark current and different thermal phenomena due mainly to the electric current flowing through the electronic components when light does not hit the sensor. This noise is shown as dots, lines, or patterns that are not related to the information that the image tries to represent, which can degrade the visual quality and the sharpness of the image.

To correct the fixed noise, the method comprises the sub-steps of 1) determining a dark image and 2) extracting said dark image from each satellite image.

To determine the dark image, a plurality of images are acquired by the sensor in the absence of illumination, and said plurality of images are averaged. The acquisition of the images can be performed by means of the sensor on Earth, prior to launching the satellite, or it can be performed directly by the sensor on board the satellite when it is in orbit.

In a particular embodiment, the method further comprises a step prior to step (b) of correcting the plurality of satellite images (1) to offset the non-uniform effect on the light of the sensor, the step of correcting being carried out by means of the following sub-steps:

- acquiring a plurality of images of a uniformly illuminated object and extracting the dark image from each one;
- determining a corrective image by averaging the plurality of images of the preceding sub-step;
- normalizing the corrective image; and
- dividing each of the satellite images without fixed noise by the normalized corrective image.

The sensors on board satellites may vary in sensitivity in different areas, which may result in a final image with irregular light intensities.

In this embodiment, the step of correcting of the method comprises reducing or eliminating the non-uniform effect on the light that the sensor has in different parts of the image. This correction is known as flat correction.

This correction involves, firstly, the acquisition of a plurality of images of a uniformly illuminated object or flat images. The acquisition of the plurality of flat images can be performed by the sensor on Earth, prior to launching the satellite, or it can be performed directly by the sensor on board the satellite when it is in orbit.

Next, the dark image is extracted from these flat images according to the preceding embodiment to eliminate the fixed noise occurring therein.

By averaging the flat images without noise, a corrective image that must be normalized for all the values to be around 1 is obtained.

Finally, the corrected image is obtained by dividing each of the satellite images without fixed noise by the corrective image. The satellite images without fixed noise are those from which the dark image has been extracted.

Advantageously, flat correction can help to minimize the unwanted variations in light intensity, which in turn can contribute to reducing noise in the final image.

In one embodiment, the sensor comprises a plurality of filters which cover a plurality of pixels. In such case, the normalization of the flat images without noise requires 1) calculating the mean value of the pixels of each filter of the sensor, and 2) dividing the pixels of the flat images without fixed noise that correspond to the area of the filter by said mean value.

In a particular embodiment, the method comprises a step prior to step (b) of eliminating variable noise in each image of the plurality of satellite images, the step of eliminating variable noise being carried out by means of the following sub-steps:

i) calculating the median of each row of the satellite image, and replacing the value of the pixels of the row exceeding a predefined threshold with the value of said median;

ii) estimating the modulus and the phase of the Fourier transform of the resultant satellite image of the preceding sub-step;

iii) calculating the median of the modulus of the Fourier transform,

iv) determining the pixels of the modulus of the Fourier transform which are outside of a predetermined radius measured from the center of said modulus of the Fourier transform;

v) replacing the values of the pixels determined in the preceding sub-step with the median calculated in sub-step iii);

vi) obtaining a smoothed satellite image by applying the inverse Fourier transform;

vii) obtaining a high-frequency image by extracting the smoothed satellite image of the satellite image;

viii) for each row of the satellite image:

- calculating the median of the corresponding row of the high-frequency image, and
- extracting said median from each pixel of the row of the satellite image.

In this embodiment, the step of correcting of the method comprises reducing or eliminating variable noise or reading noise occurring in raw satellite images. This correction can also be applied on images in which the fixed noise has been corrected or on images in which a flat correction has been applied.

The correction of variable noise, firstly, requires detecting the pixels exceeding a predefined noise threshold. If such pixels are detected, their values are replaced with the median of the row of the satellite image in which they are positioned.

Next, the modulus and the phase of the Fourier transform of the resultant image are estimated, the median of the modulus is calculated, and the pixels of the corners of the modulus of the Fourier transform are replaced with said median.

The corners of the modulus must be understood as the pixels which are outside of a predetermined radius measured from the center of the modulus of the Fourier transform, for example, the pixels which are outside of a radius of 50 pixels.

The method continues by obtaining a smoothed (low-frequency) satellite image by applying the inverse Fourier transform to the modulus modified in step v) and to the phase estimated in step ii). This image is taken out of the original satellite image, thereby obtaining a high-frequency image.

Finally, the median of each row of the high-frequency image is calculated, and said median of the corresponding row of the satellite image is extracted. For example, if for row 5 of the high-frequency image a median X has been obtained, each pixel of row 5 of the satellite image will acquire a value equal to its original value minus X.

In a particular embodiment, the method comprises a step prior to step (b) of correcting the optical distortion in the plurality of satellite images, the step of correcting optical distortion being carried out by means of the following sub-steps:

- receiving a distortion profile from the sensor comprising:

  ∘ the position of the pixel of the sensor acting as the center of optical distortion, and
  ∘ an optical distortion function indicating the optical distortion value based on the distance to the center of distortion;

- for each pixel of the sensor, calculating the distance of the pixel to the center of optical distortion, with the distance being measured according to a fourth preset norm, preferably the Euclidean norm;
- for each pixel of the sensor, calculating the optical distortion value by means of the optical distortion function and the distance calculated in the preceding sub-step; wherein the optical distortion value indicates the displacement that would have to take place in the pixel to obtain a dummy image without optical distortion;
- generating a map of coordinates which defines the relationship between the pixel coordinates of the sensor and the pixel coordinates of the dummy image without optical distortion, wherein the pixel coordinates of the dummy image without optical distortion are calculated by adding to the position of the pixels of the sensor their corresponding optical distortion values obtained in the preceding sub-step, and wherein the pixel coordinates of the satellite images coincide with the pixel coordinates of the sensor;
- obtaining a plurality of corrected images by applying the map of coordinates to the plurality of satellite images, wherein

  the pixel coordinates of the corrected images coincide with the pixel coordinates of the dummy image without optical distortion, and
  the value of each pixel of a corrected image is obtained by means of an interpolation of the pixel values of a satellite image the coordinates of which match the pixel coordinates of the corrected image according to the map of coordinates.

Optical distortion is the variation in the magnification in the image plane with respect to the center of the image. It is a phenomenon that occurs in the sensors on board the satellite, where the resultant satellite image deforms or deviates from its original form due to different irregularities, such as aberrations and lack of focus.

In particular, the optical aberrations are deviations from the real image which occur due to imperfections in the lenses or other optical elements of the sensor. These can include chromatic aberrations (differences in the manner in which the lenses focus at different light wavelengths), spherical aberrations (caused by the inability of lenses to focus light in a uniform manner on all areas of the image), and other forms of optical aberrations affecting image quality.

A pincushion-type optical distortion, in which magnification of the image increases with distance from the optical axis, can be assumed in most sensors. The visible effect is that lines that do not pass through the center of the image curve inwardly towards the center of the image.

This optical distortion shows up after the step of fusion, since the plurality of common regions do not completely coincide, leading to the occurrence of artifacts.

To correct optical distortion, the prior generation of a distortion profile by calibrating the sensor is required. This distortion profile comprises the position of the pixel of the sensor acting as the center of optical distortion, which may or may not coincide with the physical center of said sensor. The distortion profile further comprises an optical distortion function which relates the optical distortion value based on the distance to the center of distortion.

Once the distortion profile is received, the distance of each pixel of the sensor to the center of optical distortion is calculated, with the distance being measured according to a preset norm, preferably the Euclidean norm.

From the estimated distances and by using the optical distortion function, an optical distortion value for each pixel of the sensor is calculated. This optical distortion value indicates the displacement that would have to take place in the pixel to obtain a dummy image without optical distortion.

Throughout the document, a dummy image without optical distortion will be understood to mean a matrix having a predetermined size, wherein each element of the matrix corresponds with a pixel having a predetermined value; for example, zero or one.

Next, a map of coordinates, which defines the relationship between the pixel coordinates of the sensor (which coincide with the coordinates of the satellite images acquired by said sensor and having optical distortion) and the pixel coordinates of the dummy image without optical distortion, is generated. The pixel coordinates of the dummy image without optical distortion are calculated by adding to the position of the pixels of the sensor their corresponding optical distortion values obtained in the preceding sub-step.

Finally, the map of coordinates is applied to the satellite images to obtain a plurality of corrected satellite images. The pixel coordinates of said corrected satellite images coincide with the pixel coordinates of the dummy image without optical distortion, and the pixel coordinates of the sensor coincide with the pixel coordinates of the satellite images. The map of coordinates to be applied to the satellite images indicates from which pixel or pixels of the distorted image (satellite image acquired by the sensor) should values be taken to calculate the value of each pixel of the corrected image (without optical distortion) by interpolation.

The map of coordinates can also be applied to the previously corrected images without fixed and/or variable noise, and/or to the images on which a flat correction has been applied. All these images have optical distortion.

In a particular embodiment, the method comprises a step prior to step (b) of correcting the geometric distortion in the plurality of satellite images, the step of correcting geometric distortion being carried out by means of the following sub-steps:

- dividing the plurality of satellite images into at least one set of satellite images, each of the sets of satellite images comprising a plurality of consecutive satellite images;
- selecting a representative image for each set of satellite images; and

for each representative image of each set of satellite images:

- estimating a representative time instant in which the sensor acquired the representative image from the telemetry data;
- estimating the position and attitude of the satellite in the representative time instant estimated from the telemetry data;
- calculating the pointing vectors of the pixels of the sensor with respect to the inertial reference system centered on a celestial body from the position and attitude of the satellite in the representative time instant;
- obtaining the projection of each pixel of the sensor on the surface of the celestial body by calculating the intersection of the pointing vectors of the pixels of the sensor with a reference geometric shape of a representative geodesic model of the celestial body;
- estimating the effective height of each pixel of the sensor by calculating the modulus of its corresponding pointing vector, wherein the terminal point of each pointing vector is its intersection with the surface of the celestial body;
- calculating the ground sampling distance, GSD, of each pixel of the sensor, which represents the size of the projection of the pixel of the sensor on the surface of the celestial body:

$$GSD = effective\ height \cdot \frac{pixel\ size\ of\ sensor}{focal\ length\ of\ sensor}$$

- selecting the minimum GSD from all the GSD calculated for all the pixels of the sensor;
- for each pixel of the sensor, dividing the distance between the projection of the pixel and the projection of the pixel at the center of the sensor by the minimum GSD, thereby obtaining an equivalent number of pixels for said distance;
- generating a dummy image without geometric distortion from the equivalent number of pixels calculated in the preceding sub-step for each pixel of the sensor;
- generating a map of coordinates which defines the relationship between the pixel coordinates of the sensor and the pixel coordinates of the dummy image without geometric distortion, wherein the pixel coordinates of the satellite images coincide with the pixel coordinates of the sensor;
- obtaining a plurality of corrected images by applying the map of coordinates to the set of satellite images, wherein

    the pixel coordinates of the corrected images coincide with the pixel coordinates of the dummy image without geometric distortion, and
    the value of each pixel of a corrected image is obtained by means of an interpolation of the pixel values of a satellite image the coordinates of which match the pixel coordinates of the corrected image according to the map of coordinates, the satellite image being part of the set of satellite images to which the representative image belongs.

Geometric distortion of the satellite images of a celestial body occurs due to the location of the sensor in relation to the surface of the celestial body at the time of acquisition. These perspective variations when acquiring images represent a problem when aligning or registering said images.

In images taken very off-nadir (that is, those in which there are parts of the surface to be photographed which are not located directly below the sensor, but rather deviated at a certain angle), the actual distance possibly existing between two objects found in neighboring pixels varies greatly. Therefore, correction of geometric distortion consists of creating a new image in which the distance represented by each pixel is constant.

In this embodiment, the step of correcting comprises correcting the geometric distortion of raw satellite images acquired by the sensor from a map of coordinates. Alternatively, this correction can be applied to previously corrected images without fixed and/or variable noise, to images on which a flat correction has been applied, and/or to images on which an optical distortion correction has been applied.

To streamline the operation of correcting geometric distortion, the plurality of satellite images is divided into one or more sets, for each of which a representative image is selected. In this way, a map of coordinates is generated for each of said sets, and said map of coordinates is applied to all the satellite images belonging to its corresponding set to correct the geometric distortion therein.

Firstly, there is a need to know, from the telemetry data, the representative time instant in which the sensor on board the satellite acquired the representative satellite image from a set with geometric distortion, as well as the position and attitude of the satellite with respect to the inertial reference system in said time instant. As a result of this data, the off-nadir with which each representative image of each set has been taken can be calculated.

In one embodiment, to estimate this representative time instant, as well as the position and attitude of the satellite, an interpolation of the telemetry data is performed. As mentioned above, the speed at which the images are received is considerably higher than the speed at which the telemetry data is received. For example, the cameras can take 50 images per second, while the position and attitude data of the satellite, together with the acquisition time instant, are received with a mean frequency of 4 Hz, which can reach a total of 10 Hz. Therefore, for each representative image of a set, the position and attitude of the satellite, as well as the acquisition time instant, can be estimated by interpolating the data received.

Next, the pointing vectors of all the pixels of the sensor with respect to the inertial reference system are calculated, taking into account the position and attitude of the satellite in the representative time instant.

The next step is to obtain the projection of each pixel of the sensor on the surface of the celestial body by calculating the intersection of each pointing vector with a reference geometric shape of a representative geodesic model of the celestial body, for example, the WGS 84 reference ellipsoid if the celestial body is the Earth, with said ellipsoid belonging to a known geodesic model.

The method continues by estimating the effective height of each pixel of the sensor by calculating the modulus of its corresponding pointing vector, with the terminal point of each vector being understood to mean its intersection with the surface of the celestial body

The pointing vectors of each pixel and, therefore, the effective heights, are variable. They are more variable the more off-nadir the pointing vector of the pixel is.

Once the effective height of each pixel is known, its ground sampling distance (GSD) is calculated. This GSD represents the size of the projection of the pixel of the sensor on the surface of the celestial body.

$$GSD = effective\ height \cdot \frac{pixel\ size\ of\ sensor}{focal\ length\ of\ sensor}$$

The pixel size of the sensor and the focal length of the sensor are known commercial parameters that depend on the type of sensor analyzed.

For each projected pixel, the distance between the projection of said pixel and the projection of the central pixel of the sensor is then calculated as the difference between the coordinates estimated for both projections of pixels. These coordinates have been estimated by means of the intersection of each pointing vector with the reference geometric shape of the geodesic model representative of the celestial body.

The calculated distance is then divided by the minimum GSD calculated for all the pixels of the sensor projected. In this way, an equivalent number of pixels is obtained for each distance, wherein all the pixels represent the same distance.

Based on the equivalent number of pixels estimated for each distance, there is generated a dummy image without geometric distortion that will contain more pixels than the actual sensor and the satellite images, with there being more pixels the less nadir the pointing, because the geometric distortion will be greater.

Throughout the document, a dummy image without geometric distortion will be understood to mean a matrix having a size in accordance with the equivalent number of pixels calculated, wherein each element of the matrix corresponds with a pixel having a predetermined value; for example, zero or one.

Finally, a corrected image having the same size is obtained from said dummy image without geometric distortion by interpolating the values of the pixels of the satellite image. In particular, the map of coordinates indicates from which pixel or pixels of the satellite image (image acquired by the sensor having geometric distortion) should values be taken to calculate the value of each pixel of the corrected image by interpolation. The pixel coordinates of the corrected image coincide with the pixel coordinates of the dummy image without geometric distortion and the pixel coordinates of the sensor coincide with the pixel coordinates of the satellite images.

The map of coordinates can also be applied to the previously corrected images without fixed and/or variable noise, and/or to images on which a flat correction has been applied, and/or to images corrected for optical distortion. All these images have geometric distortion.

In one embodiment, the method comprises a step prior to step (b) of correcting the optical and geometric distortions in the plurality of satellite images, the step of correcting optical and geometric distortions being carried out by means of the following sub-steps:

- receiving a distortion profile from the sensor comprising:

  ∘ the position of the pixel of the sensor acting as the center of optical distortion, and
  ∘ an optical distortion function indicating the optical distortion value based on the distance to the center of distortion;

- for each pixel of the sensor, calculating the distance of the pixel to the center of optical distortion, with the distance being measured according to a fourth preset norm, preferably the Euclidean norm;
- for each pixel of the sensor, calculating the optical distortion value by means of the optical distortion function and the distance calculated in the preceding sub-step; wherein the optical distortion value indicates the displacement that would have to take place in the pixel to obtain a dummy image without optical distortion;
- generating a first map of coordinates which defines the relationship between the pixel coordinates of the sensor and the pixel coordinates of the dummy image without optical distortion, wherein the pixel coordinates of the dummy image without optical distortion are calculated by adding to the pixel coordinates of the sensor their corresponding optical distortion values obtained in the preceding sub-step and wherein the pixel coordinates of the satellite images coincide with the pixel coordinates of the sensor;
- dividing the plurality of satellite images into at least one set of satellite images, each of the sets of satellite images comprising a plurality of consecutive satellite images;
- selecting a representative image for each set of satellite images; and for each representative image of each set of satellite images:

  - estimating a representative time instant in which the sensor acquired the representative image from the telemetry data;
  - estimating the position and attitude of the satellite in the representative time instant estimated from the telemetry data;
  - calculating the pointing vectors of the pixels of the sensor with respect to the inertial reference system centered on the celestial body from the position and attitude of the satellite in the representative time instant;
  - obtaining the projection of each pixel of the sensor on the surface of the celestial body by calculating the intersection of the pointing vectors of the pixels of the sensor with a reference geometric shape of a representative geodesic model of the celestial body;
  - estimating the effective height of each pixel of the sensor by calculating the modulus of its corresponding pointing vector, wherein the terminal point of each pointing vector is its intersection with the surface of the celestial body;
  - calculating the ground sampling distance, GSD, of each pixel of the sensor, which represents the size of the projection of the pixel of the sensor on the surface of the celestial body:

$$GSD = efefctive\ height \cdot \frac{pixel\ size\ of\ sensor}{focal\ length\ of\ sensor}$$

  - selecting the minimum GSD from all the GSD calculated for all the pixels of the sensor;
  - for each pixel of the sensor, dividing the distance between the projection of the pixel and the projection of the pixel at the center of the sensor by the minimum GSD, thereby obtaining an equivalent number of pixels for said distance;
  - generating a dummy image without optical and geometric distortions from the equivalent number of pixels calculated in the preceding sub-step for each pixel of the sensor;
  - generating a second map of coordinates which defines the relationship between the pixel coordinates of a dummy image without optical distortion and with geometric distortion, and the pixel coordinates of the dummy image without generated optical and geometric distortions; wherein

the pixel coordinates of the dummy image without optical distortion and with geometric distortion coincide with the pixel coordinates of the sensor and with the pixel coordinates of the satellite images, and

it is assumed that said image is free of optical distortion;

- generating a combined map of coordinates, which defines the relationship between the pixel coordinates of the dummy image without optical and geometric distortions, and the pixel coordinates of the sensor, wherein:

(i) by evaluating the second map of coordinates, the pixel coordinates of the dummy image without optical distortion and with geometric distortion matching the pixel coordinates of the dummy image without optical and geometric distortions having are identified;

(ii) by evaluating the first map of coordinates, the pixel coordinates of the dummy image without optical distortion matching the pixel coordinates of the dummy image without optical distortion and with geometric distortion identified in step (i) are estimated by interpolation,

(iii) by evaluating the first map of coordinates, the pixel coordinates of the sensor that correspond with the pixel coordinates of the dummy image without optical distortion estimated in step (ii) are determined by interpolation; and

(iv) the combined map of coordinates is generated by establishing the relationship between the pixel coordinates of the sensor determined in step (iii) and the pixel coordinates of the dummy image without optical and geometric distortions; and

- obtaining a plurality of corrected images by applying the combined map of coordinates to the set of satellite images, wherein

the pixel coordinates of the corrected images coincide with the pixel coordinates of the dummy image without optical and geometric distortions, and

the value of each pixel of a corrected image is obtained by combining the values of the pixels of a satellite image the coordinates of which match the pixel coordinates of the corrected image according to the combined map of coordinates, the satellite image being part of the set of satellite images to which the representative image belongs.

Method steps which allow optical and geometric distortions to be corrected at the same time are described in this embodiment.

Firstly, a first map of coordinates is generated following the steps of the embodiment in which the isolated correction of optical distortion is described. In particular, this first map of coordinates indicates from which pixel or pixels of the image with optical distortion (satellite image acquired by the sensor) should values be taken to calculate the value of each pixel of an image without optical distortion by interpolation.

In this case, the first map of coordinates is not applied to the satellite images, rather it is used to subsequently generate a combined map of coordinates.

Once the first map of coordinates is obtained, the method continues with the steps of the embodiment in which the correction of geometric distortion is defined for generating a second map of coordinates.

In particular, this second map of coordinates indicates from which pixel or pixels of a dummy image with geometric distortion, but without optical distortion, should values be taken to calculate the value of each pixel of a dummy image without optical and geometric distortions by interpolation. For the generation of the second map of coordinates, it is assumed that the images with geometric distortion are already previously corrected for optical distortion.

Throughout the document, a dummy image without optical distortion and with geometric distortion will be understood to mean a matrix having a size in accordance with the equivalent number of pixels calculated, wherein each element of the matrix corresponds with a pixel having a predetermined value; for example, zero or one.

Throughout the document, a dummy image without optical and geometric distortions will be understood to mean a matrix having a size in accordance with the equivalent number of pixels calculated, wherein each element of the matrix corresponds with a pixel having a predetermined value; for example, zero or one.

The method continues by generating a combined map of coordinates from the first map of coordinates and the second map of coordinates.

To generate this combined map of coordinates, the following steps are performed.

(i) By evaluating the second map of coordinates, the pixel coordinates of the dummy image without optical distortion and with geometric distortion matching the pixel coordinates of the dummy image without optical and geometric distortions are identified.

(ii) By evaluating the first map of coordinates, the pixel coordinates of the dummy image without optical distortion (of the first map of coordinates) matching the pixel coordinates of the dummy image without optical distortion and with geometric distortion (of the second map of coordinates) identified in step (i) are estimated by interpolation.

(iii) By evaluating the first map of coordinates, the pixel coordinates of the sensor that correspond with the pixel coordinates of the dummy image without optical distortion estimated in step (ii) are determined by interpolation.

(iv) Finally, the combined map of coordinates is generated by establishing the relationship between the pixel coordinates of the sensor determined in step (iii) (from the first map of coordinates) and the pixel coordinates of the dummy image without optical and geometric distortions of the second map of coordinates.

Correction of distortions ends by obtaining a plurality of corrected images of the same size as the size of the image without optical and geometric distortions. To that end, the combined map of coordinates is applied to each satellite image, such that the value of each pixel of a corrected image (the coordinates of which coincides with the pixel coordinates of the image without optical and geometric distortions) is obtained by combining the values of the pixels of a satellite image (with coordinates matching the pixel coordinates of the sensor) the positions of which correspond with the pixel coordinates of the corrected image (or with the pixel coordinates of the dummy image without optical and geometric distortions) according to the combined map of coordinates.

Alternatively, the combined map of coordinates can also be applied to the previously corrected images without fixed and/or variable noise, and/or to images on which a flat correction has been applied.

To streamline the operation of correcting optical and geometric distortions, the plurality of satellite images is divided into one or more sets, for each of which a representative image is selected. In this way, the second map of coordinates and the combined map of coordinates are generated for each of said sets, with the combined map of coordinates being applied to all the satellite images belonging to set for the which said map has been generated.

Advantageously, the creation of a combined map of coordinates involves correcting the satellite images only once, so the interpolation of the pixel values of the satellite images takes place only once. The calculations required for the correction are thereby streamlined since the step of correcting optical and geometric distortions is quicker than the combination of the steps of correcting optical distortion and correcting geometric distortion separately. Additionally, the use of a single combined map of coordinates allows reducing system requirements in terms of the memory needed.

In a particular embodiment:

- the estimate of the first time instant in which the sensor acquired the first satellite image is carried out by interpolating the plurality of telemetry time instants; and/or
- the estimate of the second time instant in which the sensor acquired the second satellite image is carried out by interpolating the plurality of telemetry time instants; and/or
- the estimate of the representative time instant in which the sensor acquired the representative satellite image is carried out by interpolating the plurality of telemetry time instants; and/or
- the estimate of the position and attitude of the satellite in the estimated first time instant, and/or in the estimated second time instant, and/or in the estimated representative time instant is carried out by interpolating the plurality of positions and attitudes of the satellite of the telemetry data.

As a general rule, the speed at which the images are received is considerably higher than the speed at which the telemetry data is received. For example, the sensor can take 50 images per second while the position and attitude data of the satellite, together with the acquisition time instant, are received with a mean frequency of 4 Hz, which can reach a total of 10 Hz.

Therefore, for one and/or both images to be aligned, in this embodiment the position and attitude of the satellite, as well as the acquisition time instant, are estimated by interpolating the telemetry data received.

Additionally or alternatively, for the representative image of each set of satellite images (according to the embodiments in which geometric distortion or optical and geometric distortions are corrected), in this embodiment the position and attitude of the satellite, as well as the representative acquisition time instant, are estimated by interpolating the telemetry data received.

A second inventive aspect provides a system for processing satellite images comprising a processor configured to carry out steps (e.2) and (e.3) of the method of the first inventive aspect and a field-programmable gate array, FPGA, configured to carry out the rest of the steps of the method of the first inventive aspect.

Throughout the document, FPGA (field-programmable gate array) will be understood to mean a programable device comprising logic blocks that can be configured in terms of their interconnection and functionality. FPGA allows designing and executing personalized digital circuits in real time, offering significant flexibility to adapt to specific needs without having to change the physical chip. Its reprogrammability is more than advantageous in environments that require continuous hardware adaptability.

In one embodiment, the processor and the FPGA are configured to execute steps (a)-(e) of the method on board a satellite.

In one embodiment, the FPGA is in communication with the sensor of the satellite to receive the raw satellite images acquired by said satellite.

In one embodiment, the FPGA is further configured to deserialize the raw satellite images in order to translate them into pixels.

In one embodiment, the FPGA is further configured for compress the satellite images.

In one embodiment, the system further comprises a storage element and the FPGA is configured to store satellite images, compressed satellite images, the reference image, and/or the set of common regions in the storage element.

In one embodiment, the FPGA comprises at least one direct memory access, DMA, module configured to access the pair of images to be aligned and/or the reference image, and/or the set of common regions previously stored in the storage element of the system.

In one embodiment, the FPGA comprises at least one direct memory access, DMA, writing module configured to store, in the storage element, the displacement calculated by the FPGA during the alignment of a pair of images.

In one embodiment, the storage element is a memory, a disk, or a database which is in communication with the FPGA. In one embodiment, the storage element is a DDR memory (double data rate memory).

In an embodiment in which the displacement is determined by minimizing a linear cross-correlation between the first satellite image and the second satellite image to be aligned, the FPGA comprises a cross-correlation module configured to carry out a linear cross-correlation between the images.

In a more particular embodiment, the cross-correlation module comprises a plurality of modules configured to perform the operations required by the cross-correlation; for example, a module which applies a Vonhann matrix, a module which calculates the two-dimensional Fourier transform, or a complex number multiplier module.

In one embodiment, the FPGA is configured to adjust the precision of the integer part and the fractional part of the result of each operation that it executes.

The complexity of FPGA lies in the fact that it cannot be put in floating-point operation, so the FPGA according to this embodiment adjusts the precision of the integer part and the fractional part of the result for each operation so as not to obtain an overflow in the operations. Throughout the document, it will be understood that an overflow occurs in an operation when an attempt is made to create a numerical value that is outside the range that can be represented by a predetermined number of digits, either greater than the maximum or less than the minimum representable value.

In one embodiment, the FPGA comprises a demultiplexer, a plurality of image and weight storage modules, and a fusing module, wherein:

the demultiplexer is configured to receive, by means of the at least one memory access, DMA, module, the reference image and the set of common regions together with the weights estimated in sub-step (e.3) of the method by the processor of the system;
each image and weight storage module is configured to store and send the reference image or a common region of the set of common regions together with the weights thereof to the fusing module; and
the fusing module is configured to receive the weights and to receive and fuse the reference image and the set of common regions based on said weights.

In one embodiment, each image and weight storage module is configured

to store a plurality of rows of the reference image or of a common region, and
to send to the fusing module part of the plurality of rows of the reference image or of the common region while temporarily storing the rest of the rows.

Therefore, the FPGA advantageously stores and processes the lines of the reference image and of the set of common regions in parallel.

In this embodiment, each image and weight storage module is configured as a ping-pong type buffer. Advantageously, this configuration allows storing part of the rows of the reference image or of a common region while sending another part of the rows, thereby preventing dead times which increase the execution time of the method unnecessarily.

In one embodiment, the image and weight storage modules are configured to perform sending to the fusing module at the same time.

In one embodiment, the FPGA further comprises an output memory comprising a plurality of RAM memory blocks, for example, BRAMs, configured to store a plurality of lines of the oversampled fused image and to send said lines to the processor; for example, to store the oversampled fused image in a storage element or to send it to an additional module of the system or to a receiver located on Earth.

In one embodiment, the FPGA further comprises a special width converter configured to change the width of the data; for example, to transition from 48-bit input to 64-bit output.

In one embodiment, the FPGA comprises at least one direct memory access, DMA, writing module configured to send the oversampled fused image to a processor.

In one embodiment, the number of pixels of the reference image and of the set of common regions contributing to each pixel of the oversampled fused image is configurable.

In one embodiment, in the same clock cycle, a plurality of pixels of the oversampled fused images, for example, four pixels, are calculated in parallel.

In a particular embodiment, the FPGA is further configured to carry out, in parallel:

- at least one of the sub-steps of step (b) of the method; and/or
- step (c) of the method; and/or
- step (d) of the method; and/or
- at least one of the sub-steps of step (e) of the method.

Image alignment and image fusion are two computationally costly processes. In this way, in order to be able to process satellite images in real time or close to real time, beyond the acceleration techniques of the software itself, hardware techniques that allow a high parallelization capacity, such as the use of FPGA technology, are required.

An FPGA allows executing different processes in parallel; therefore, in this embodiment different steps and sub-steps of the method are executed in the FPGA in parallel to take advantage of its capacity to accelerate computationally costly operations, thereby reducing total processing time.

For example, the FPGA can parallelize the sub-steps of image fusion, in which operations of multiplying and adding up a large amount of pixels are performed, entailing a more than significant saving in the execution time of the step of fusing.

Another possible hardware solution for parallelizing the execution of the method is the use of a GPU (graphics processing unit), an electronic device that allows performing mathematical calculations or high-speed graphics processing.

However, the FPGA-based solution has a lower energy consumption than the GPU-based solution, so the use of FPGAs is optimal when executing the method of processing images on board a satellite.

In a particular embodiment, the processor comprises at least one of the following threads:

- a first thread configured to carry out the steps of correcting fixed noise, and/or variable noise, and/or the step of flat correction of the method of the first inventive aspect; or
- a second thread configured to carry out the step of correcting optical distortion of the method of the first inventive aspect or the step of correcting optical and geometric distortions of the first inventive aspect; or
- a third thread configured to carry out the step of correcting geometric distortion of the method of the first inventive aspect or the step of correcting optical and geometric distortions of the first inventive aspect; or
- a fourth thread to order the FPGA to execute steps (a)-(e) of the method of the first inventive aspect; or
- a combination of any of the above; and

wherein the threads of the processor are further configured to carry out the steps in parallel.

In this embodiment, besides the FPGA, the system comprises a processor with several threads. Each of these threads executes one or more steps of correcting images, or orders the actions of the FPGA.

In particular, the satellite images acquired by the sensors are processed by the different threads of the processor to execute one or more of the steps of correcting the images in parallel; for example, to eliminate fixed noise and/or variable noise, or to correct optical and/or geometric distortions. Furthermore, the processor has another thread to order the FPGA to execute steps (a)-(e) of the method in parallel with the execution of the steps of correcting.

In one embodiment, the processor comprises, at the same time, second and third threads to carry out the steps of correcting optical distortion and correcting geometric distortion separately, i.e., each step of correcting is carried out in a different thread. In an alternative embodiment, the processor comprises the second thread or the third thread to carry out the step of correcting optical and geometric distortions at the same time.

In one embodiment, the actions of the different threads of the processor are executed on board a satellite and in real time.

In one embodiment, the processor is further configured to manage the radio transmission of data, to send telemetries, and/or to monitor temperatures.

In one embodiment, the FPGA and the processor are part of a Multi-Processor System On-Chip (MPSoC).

Throughout the document, MPSoC should be understood to mean a chip with multiple microprocessors including at least one microprocessor and one FPGA, acting as the processing core. Optionally, the MPSoC comprises a microcontroller.

In one embodiment, the MPSoCs is part of a System-on-Module (SOM) together with a memory, and the communications and the electronics necessary for its operation.

In a particular embodiment, the SOM is part of an onboard computer (OBC).

In one embodiment, the microprocessor and/or the FPGA of the MPSoC are further configured to transmit the images with super resolution obtained by the FPGA to a receiver located on Earth.

In a particular embodiment, the system is implemented in a printed circuit board, PCB.

In one embodiment, the PCB comprises at least one communication interface. In one embodiment, the PCB is further configured to monitor electronic, physical, and software parameters, such as temperature, power supply, voltages, currents, and internal clocks of the system. In one embodiment, the PCB comprises a microcontroller configured to manage the power electronics and redundancies of the system.

A third inventive aspect provides a camera for observing celestial bodies comprising:

- a computer comprising at least one system according to the second inventive aspect; and
- a sensor configured to acquire a plurality of satellite images.

In one embodiment, the computer of the camera comprises a plurality of systems. Advantageously, the computer has redundancy, replicating the system two or more times for higher reliability.

In one embodiment, the computer of the camera comprises a plurality of systems implemented in a PCB. Advantageously, the computer comprises a PCB with redundancy, replicated two or more times for higher reliability.

In one embodiment, the PCB board comprises at least two bases to integrate two or more systems, which facilitates the maintenance capacity and scalability of the camera. In one embodiment, the computer is an OBC comprising a PCB with two SOMs (Systems-on-Module). Each of these SOMs comprises an MPSoC and the memory, the communications, and the electronics necessary for its operation. Advantageously, the SOMs allow modularity and versatility through standards connectors, facilitating board interchangeability.

A fourth inventive aspect provides a satellite comprising the camera for observing celestial bodies of the third inventive aspect.

The payload of the satellite of the fourth inventive aspect is the camera for observing celestial bodies, comprising the sensor configured to acquire satellite images, and a computer (OBC) comprising one or more systems according to the second inventive aspect.

The process for acquiring and processing images from the satellite starts from the instruction sent from Earth about the geographic area to be photographed. When the specified location reaches the satellite, the OBC is activated, orienting the satellite towards the area of interest to start image acquisition using a predetermined communication protocol, for example, Cameralink or Aurora.

The images captured by the sensor are transmitted to the OBC, wherein the system of the second inventive aspect plays a crucial role. This system comprises an FPGA configured to receive and read the satellite images, deserialize them (translating them into pixels), and process them by means of the method of the first inventive aspect. Optionally, the processing carried out by the FPGA comprises compressing images and/or storing them in a storage element (for example, in a memory in communication with the FPGA).

Once the desired area is captured, the OBC system turns off. To download the images, when the satellite flies over a reception area, the stored images are loaded from the storage element and transmitted by radio.

The execution of the method of the first inventive aspect can be carried out both immediately after image acquisition and immediately before image transmission. Advantageously, the satellite of the invention facilitates the processing of the images within the required times and coordinates the internal and external communications. This optimizes image acquisition, processing, and transmission from space, significantly improving the output and quality of the captured images, with options to both keep the images in the electronics of the satellite until their transmission and send them directly through compatible devices.

All the features and/or steps of methods described in this specification (including the claims, description, and drawings) can be combined in any combination, with the exception of the combinations of such mutually exclusive features.

## DESCRIPTION OF THE DRAWINGS

These and other features and advantages of the invention will become more apparent based on the following detailed description of a preferred embodiment, given only by way of illustrative and non-limiting example, in reference to the attached figures.

Figure 1          This figure shows a diagram of the computer-implemented method for processing satellite images according to an embodiment of the invention.

Figure 2    This figure illustrates an embodiment of the invention in which the initial horizontal and vertical displacements between a pair of satellite images are calculated based on telemetry data.

Figure 3    This figure shows the alignment of a pair of satellite images based on image pyramids where the images have different resolutions according to an embodiment of the invention.

Figures 4a-4b    These figures show the generation of an image pyramid with satellite images (Figure 4a) based on different subsampling factors (Figure 4b).

Figure 5    This figure shows the alignment of two pairs of satellite images based on image pyramids where the images have different resolutions, the pyramids having a different number of levels, according to an embodiment of the invention.

Figures 6a-6c    These figures show the effects of optical distortion and geometric distortion in the satellite images.

Figure 7    This image shows a system for processing satellite images according to an embodiment of the invention.

Figure 8    This image shows a diagram of the architecture of an FPGA of the system for aligning a pair of satellite images according to an embodiment of the invention.

Figure 9    This image shows a diagram of the architecture of an FPGA of the system for obtaining the oversampled fused image according to an embodiment of the invention.

Figure 10    This image shows a viewing camera comprising a plurality of systems for processing satellite images according to an embodiment of the invention.

Figure 11    This image shows a satellite comprising a plurality of systems for processing satellite images according to an embodiment of the invention.

## DETAILED DESCRIPTION OF THE INVENTION

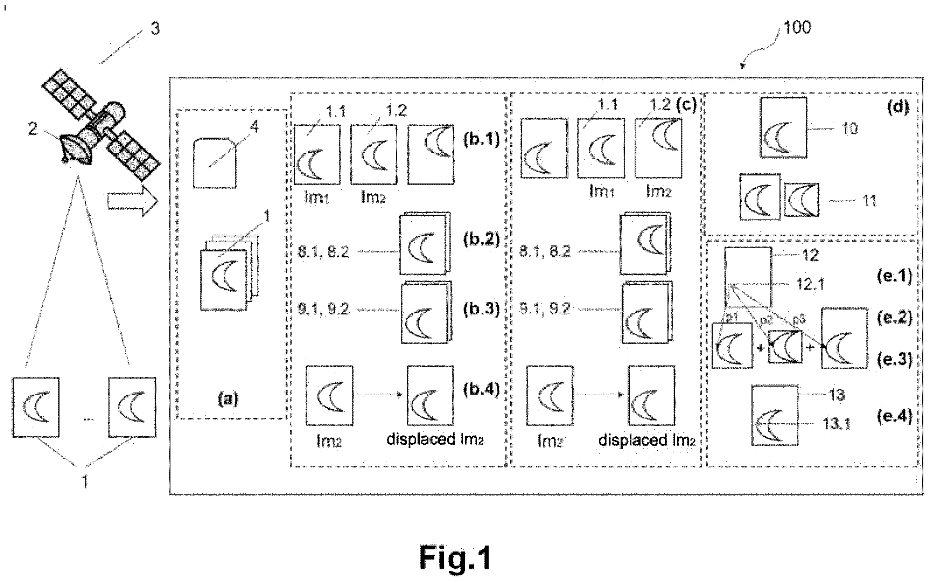

Figure 1 shows a diagram of the computer-implemented method (100) for processing satellite images (1) according to an embodiment of the invention, the method (100) comprising the following steps:

Step a

In step (a), a plurality of satellite images (1) acquired by a sensor (2) is received on board a satellite (3). Additionally, telemetry data (4) is received, this telemetry data (4) comprising a plurality of positions and attitudes of the satellite (3) with respect to an inertial reference system centered on a celestial body (14) in a plurality of telemetry time instants. The sensor (2) on board the satellite (3) gradually acquires the plurality of satellite images (1) during the course of the plurality of telemetry time instants.

The number of satellite images (1) shown in this Figure 1 is three, but said number can be greater or smaller.

Step b

During step (b), a first pair of consecutive satellite images of the plurality of satellite images (1) is aligned by carrying out the following sub-steps.

In sub-step (b.1), a first satellite image (1.1), indicated as Im1 in Figure 1, and a second satellite image (1.2), indicated as Im2 in Figure 1, are selected. Both images are to be aligned.

In sub-step (b.2), an initial horizontal displacement (8.1) and an initial vertical displacement (8.2) of the second satellite image (1.2) with respect to the first satellite image (1.1) are calculated. To that end:

- a first time instant in which the sensor (2) acquired the first satellite image (1.1) is estimated from the telemetry data (4);
- the position and attitude of the satellite (3) in the first time instant estimated from the telemetry data (4) is estimated;
- a second time instant in which the sensor (2) acquired the second satellite image (1.2) is estimated from the telemetry data (4);
- the position and attitude of the satellite (3) in the second time instant estimated from the telemetry data (4) is estimated; and
- initial displacements (8.1, 8.2) from the positions and attitudes of the satellite (3) in the first time instant and in the second time instant are calculated.

In step (b.3), the initial displacements (8.1, 8.2) are refined, that is, a total horizontal displacement (9.1) and a total vertical displacement (9.2) that must be applied to the second satellite image (1.2) to minimize the distance between said second satellite image (1.2) and the first satellite image (1.1) are calculated. The distance must be measured according to a first preset norm, preferably the Euclidean norm.

In step (b.4), the first satellite image (1.1) and the second satellite image (1.2) are aligned by applying the total displacements (9.1, 9.2) to the second satellite image (1.2).

Step c

Once the first pair of images Im1 and Im2 is aligned, the method (100) continues in step (c), repeating step (b) for all the pairs of consecutive satellite images of the plurality of satellite images (1).

In each iteration of step (b), the first satellite image (1.1) selected in sub-step (b.1) corresponds with the second satellite image (1.2) of the previous iteration. This can be seen Figure 1, where image Im2 of the previous iteration becomes image Im1 in step (c).

Furthermore, in each iteration of step (b), the total horizontal displacement (9.1) obtained in sub-step (b.3) of the previous iteration must be added to the total horizontal displacement (9.1) obtained in sub-step (b.3) and the total vertical displacement (9.2) obtained in sub-step (b.3) of the previous iteration must be added to the total vertical displacement (9.2) obtained in sub-step (b.3). This is necessary so that all the images (1) are aligned with respect to the same initial image, in this case image Im1 selected in the first iteration of step (b).

Step d

Next, the method (100) continues in step (d), with the first satellite image (1.1) selected in sub-step (b.1) of the first iteration of step (b) being selected as a reference image (10).

Additionally, at least one common region between the reference image (10) and each of the second satellite images (1.2) that will have been displaced in sub-step (b.4) of all the iterations of step (b) is obtained. The result is a set of common regions (11).

The method (100) ends with step (e) in which an oversampled fused image (13), that is, an image with super resolution, is obtained. To that end, the reference image (10) and the set of common regions (11) are fused.

This fusion consists of several sub-steps:
First, in sub-step (e.1), an oversampled image (12) is generated, wherein the resolution of the oversampled image (12) is the resolution of the reference image (10) multiplied by a predefined oversampling factor. The values of the pixels of this oversampled image (12) are, for example, zero or one.

In sub-step (e.2), for each pixel (12.1) of the oversampled image (12), the distance from the center of said pixel (12.1) to the center of one or more pixels of each region of the set of regions (11) and to the center of one or more pixels of the reference image (10) is determined. The distance is measured according to a second preset norm, preferably the Euclidean norm.

In sub-step (e.3), for each pixel (12.1) of the oversampled image (12.1), a weight (p1, p2, and p3 in Figure 1) for the pixel or pixels of each region of the set of regions (11) and for the pixel or pixels of the reference image (10) is estimated based on the determined distances. In one example, the larger the estimated distance is, the smaller the given weight is.

Finally, in sub-step (e.4), the oversampled fused image (13) is obtained. The value of each pixel (13.1) of the oversampled fused image (13) is calculated by adding up the values of the pixel or pixels of each region of the set of regions (11) and of the pixel or pixels of the reference image (10), weighting them based on the weights (p1, p2, p3) estimated in the preceding sub-step.

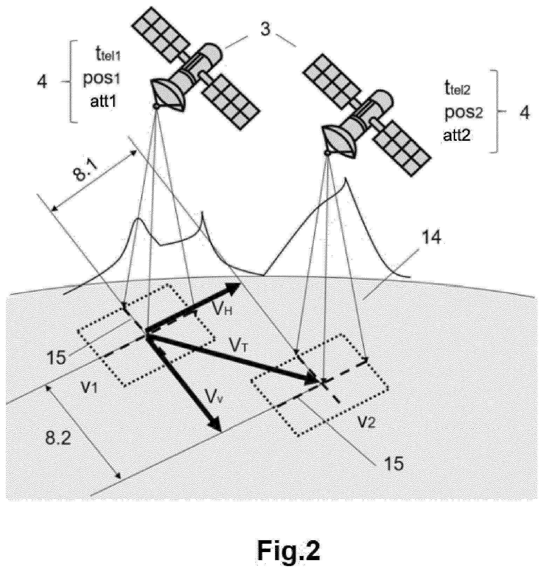

Figure 2 illustrates an embodiment of the invention in which the initial horizontal displacement (8.1) and the initial vertical displacement (8.2) between a pair of satellite images (1.1, 1.2) are calculated based on telemetry data (4); in particular, from the estimate of the positions and attitudes of the satellite (3) in the first time instant and in the second time instant.

This calculation of the initial displacements (8.1, 8.2) is carried out by means of the following steps:

Step 1

In the first iteration of step (b), the following actions are performed for each pair of consecutive telemetry time instants, $t_{tel1}$ and $t_{tel2}$.

The pointing vectors of the pixel at the center of the sensor (2) and of at least two pixels of two segments of the sensor (2), intersecting at the center of the sensor (2) and perpendicular to one another, are calculated with respect to the inertial reference system from the positions (posi and $pos_2$) and attitudes (act, and $att_2$) of the satellite (3) in the first telemetry time instant, $t_{tel1}$, and in the second telemetry time instant, $t_{tel2}$. In other words, for each telemetry time instant, $t_{tel1}$ and $t_{tel2}$, the positions (posi and $pos_2$) and attitudes ($att_1$ and $att_2$) of the satellite (3) are identified according to the telemetry data (4) and, knowing said positions (posi and $pos_2$) and attitudes (atti and $att_2$) of the satellite (3), the pointing vectors are calculated.

As can be seen in Figure 2, pointing vectors have been calculated for the pixel at the center of the sensor (2) and for two pixels of the segments intersecting at said center, said pixels being at the upper and right-side ends of the sensor (2).

Next, the projection of the pixel at the center of the sensor (2) and of the pixels of the segments of the sensor (2) on the surface of the celestial body (14) is obtained by calculating the intersection of the pointing vectors of said pixels with a reference geometric shape of a representative geodesic model of the celestial body (14).

In Figure 2, the celestial body (14) is Earth and the geometric shape is the WGS 84 reference ellipsoid. However, other celestial bodies (14) and other geodesic models are possible in the context of the invention.

The method (100) continues by defining a projected reference system (15) as the projection of pixels of the segments of the sensor (2) and the projection of the pixel at the center of the sensor (2) on the surface of the celestial body (14) assuming that the surface of the celestial body (14) is flat, that the reference system made up of the projections of the pixels of the segments of the sensor (2) and the projection of the pixel at the center of the sensor (2) is orthogonal, and that the projection of the pixel at the center of the sensor (2) corresponds with the center of the projected reference system (15).

Then, for the pixel at the center of the sensor (2), the effective height (modulus of its pointing vector, understanding that the terminal point of the vector is its intersection with the surface of the celestial body), and the ground sampling distance, GSD, are calculated:

$$GSD = effective\ height \cdot \frac{pixel\ size\ of\ sensor}{focal\ length\ of\ sensor}$$

With the data above, first, a first linear velocity, $\vec{v_1}$, of the projection of the pixel at the center of the sensor (2) due to the rotation of the celestial body (14) is calculated. The first linear velocity $\vec{v_1}$ is referenced in the inertial reference system and is calculated from the angular velocity, $\vec{\omega}$, of the celestial body (14) and from the perpendicular distance from the projection of the pixel at the center of the sensor to the axis of rotation of the celestial body(14), $\vec{R}$:

$$\vec{v_1} = \vec{\omega}\ x\ \vec{R}$$

where $\vec{\omega}$ and $\vec{R}$ are vectors referenced in the inertial reference system.

In this example, the angular velocity of the Earth is $7.27 \times 10^{-5}$ rad/s and $\vec{R}$ is 6.378 kilometers.

Secondly, a second linear velocity, $\vec{v_2}$, of the projection of the pixel at the center of the sensor (2) due to the movement of the satellite (3) is calculated:

$$\vec{v_2} = \frac{\vec{pos_2} - \vec{pos_1}}{t_{tel2} - t_{tel1}}$$

where:

- $\vec{pos_2}$ is the position vector of the projection of the pixel at the center of the sensor (2) in the second telemetry time instant, $t_{tel2}$, the vector being referenced in the inertial reference system; and
- $\vec{pos_1}$ is the position vector of the projection of the pixel at the center of the sensor (2) in the first telemetry time instant, $t_{tel1}$, the vector being referenced in the inertial reference system; and
- $\vec{v_2}$ is referenced in the inertial reference system.

Finally, the total linear velocity, $\vec{v_T}$, of the projection of the pixel at the center of the sensor (2) is calculated in pixels per second and said total linear velocity is referenced in the projected reference system (15):

$$\vec{v_T} = \frac{\vec{v_1} + \vec{v_2}}{GSD}$$

To reference the total linear velocity in the projected reference system (15), for example, the horizontal and vertical components of said total linear velocity are projected on the projected reference system (15).

This total linear velocity must be calculated for each pair of consecutive telemetry time instants. That is, the method (100) requires a first calculation of the total linear velocity taking into account telemetry time instants one and two of the telemetry data (4), a second calculation of total linear velocity taking into account telemetry time instants two and three of the telemetry data (4), and so on and so forth until a last calculation of total linear velocity taking into account the next-to-last and last telemetry time instants.

## Step 2

In the first iteration of step (b), the horizontal linear velocity, $v_H(t)$, and vertical linear velocity, $v_V(t)$, are calculated as a function of time by interpolating the horizontal and vertical components of the total linear velocities, $\vec{v_T}$, obtained for all the pairs of consecutive telemetry time instants.

## Step 3

In any iteration of step (b), for the pair of consecutive satellite images to be aligned, the initial horizontal displacement (8.1) and the initial vertical displacement (8.2) are estimated by integrating the horizontal and vertical linear velocities as a function of time, $v_H(t)$ and $v_V(t)$, respectively, between the first time instant and the second time instant in which each satellite image of the pair of consecutive satellite images to be aligned is acquired.

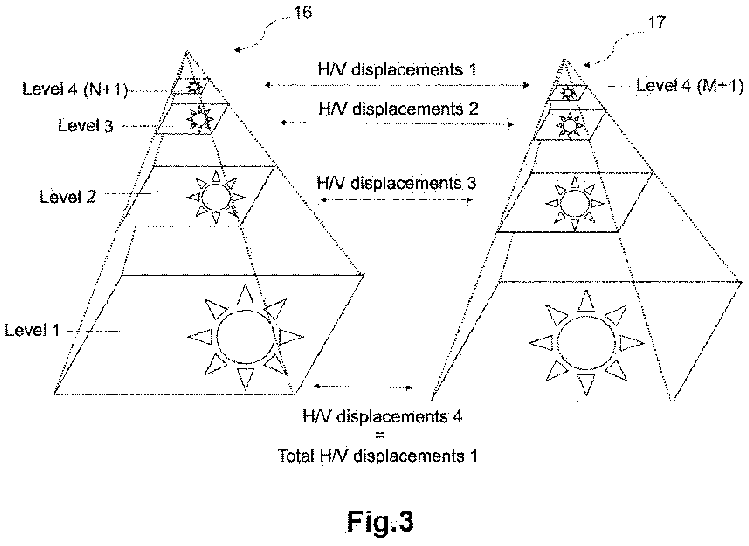

Figure 3 shows the alignment of a pair of satellite images (1.1, 1.2) carried out in sub-step (b.3) of the method (100), which is based on the alignment of image pyramids (16, 17) where the images have different resolutions according to an embodiment of the invention. This particular embodiment of the alignment of satellite images (1.1, 1.2) comprises the following sub-steps:

## Sub-step (b.3.i)

For the first satellite image (1.1), a first image pyramid (16) is generated by subsampling the first satellite image (1.1) with N predefined subsampling factors (in this example, N=3), where N is greater than or equal to one.

As can be seen in Figure 3, the first image pyramid (16) comprises 4 levels (N+1 levels), wherein:

- the first level of the first image pyramid (16) comprises the first satellite image (1.1), and
- the i-th level of the first image pyramid (16) comprises an image subsampled from the first satellite image (1.1) with the k-th subsampling factor, where i = 2,...,4 (that is, N+1) and k = i-1.

## Sub-step (b.3.ii)

For the second satellite image (1.2), a second image pyramid (17) is generated by subsampling the second satellite image (1.2) with M predefined subsampling factors (in this example, M=3), where M is greater than or equal to one.

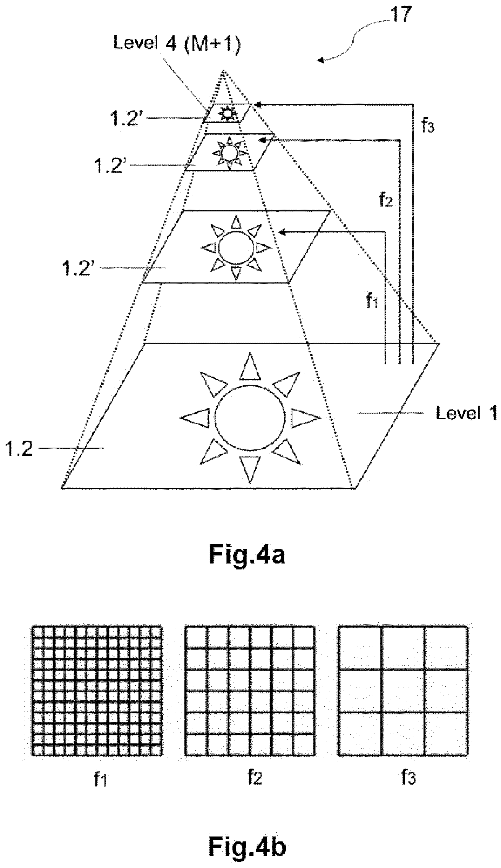

Figures 4a and 4b show the generation of this image pyramid (17) with satellite images (Figure 4a) based on 3 different subsampling factors (Figure 4b) $f_1$, $f_2$, and $f_3$.

As can be seen in Figure 4a, this second image pyramid (17) comprises 4 levels (M+1 levels), wherein:

- M is equal to N (although it could be less),
- the first level of the second image pyramid (17) comprises the second satellite image (1.2), and
- the j-th level of the second image pyramid (17) comprises a subsampled image (1.2') from the second satellite image (1.2) with the m-th subsampling factor ($f_1$, $f_2$ or $f_3$), where j = 2,...,4 (i.e., M+1) and m = j-1.

## Sub-step (b.3.iii)

Based on the initial horizontal displacement (8.1) and the initial vertical displacement (8.2), the horizontal displacement and the vertical displacement (H/V displacement 1 in Figure 3) that must be applied to the image of level 4 (level M+1) of the second image pyramid (17) to minimize the distance between said image and the image of the first image pyramid (16) of the same level 4 are determined, with the distance being measured according to a third preset norm, preferably the Euclidean norm

## Sub-step (b.3.iv)

Based on the horizontal displacement and the vertical displacement determined in the preceding sub-step (H/V displacement 1), the horizontal displacement and the vertical displacement (H/V displacement 2) that must be applied to the image of the lower level (level 3) of the second image pyramid (17) to minimize the distance between said image and the image of the first image pyramid (16) of the same level 3 are determined, with the distance being measured according to the third preset norm. Since said lower level (level 3) is not level 1 of the second image pyramid (17), step (b.3.iv) is repeated.

In this way, based on the horizontal displacement and the vertical displacement determined in the preceding sub-step (H/V displacement 2), the horizontal displacement and the vertical displacement (H/V displacement 3) that must be applied to the image of the lower level (level 2) of the second image pyramid (17) to minimize the distance between said image and the image of the first image pyramid (16) of the same level 2 are determined, with the distance being measured according to the third preset norm. Since said lower level (level 2) is not level 1 of the second image pyramid (17), step (b.3.iv) is repeated.

Therefore, based on the horizontal displacement and the vertical displacement determined in the preceding sub-step (H/V displacement 3), the horizontal displacement and the vertical displacement (H/V displacement 4) that must be applied to the image of the lower level (level 1) of the second image pyramid (17) to minimize the distance between said image and the image of the first image pyramid (16) of the same level 1 are determined, with the distance being measured according to the third preset norm. Since said lower level (level 1) is level 1 of the second image pyramid (17), the horizontal displacement of H/V displacement 4 is established as the total horizontal displacement (9.1) and the vertical displacement of H/V displacement 4 is established as the total vertical displacement (9.2).

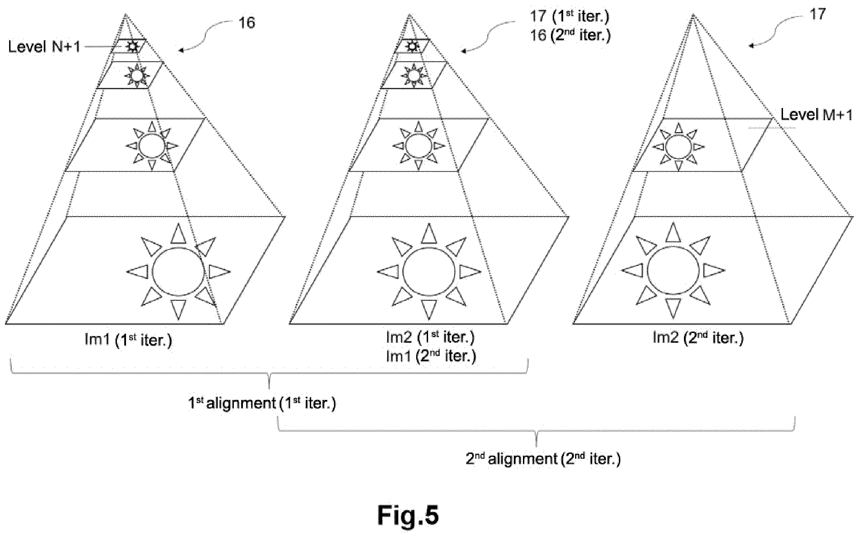

Figure 5 shows the alignments of a first pair of satellite images (1.1, 1.2) and of a second pair of satellite images (1.1, 1.2) based on image pyramids (16, 17) where the images have different resolutions, the pyramids for the alignment of the first pair of images (1.1, 1.2) having the same number of levels and the pyramids for the alignment of the second pair of images (1.1, 1.2) having a different number of levels, according to an embodiment of the invention.

In particular, Figure 5 shows a first alignment of a first pair of consecutive images Im1 and Im2 during the first iteration of step (b) of the method (100). In this first alignment, images 1 and 2 of the plurality of satellite images (1) are aligned, for each of which a pyramid (16, 17) with the same number of levels is generated; in this example, 4 levels (N = 3).

Additionally, Figure 5 shows a second alignment of a second pair of consecutive images Im1 and Im2 during the second iteration of step (b) of the method (100). In this second alignment, images 2 and 3 of the plurality of satellite images (1) are aligned, for each of which a pyramid (16, 17) with a different number of levels is generated; in this example, 4 levels for the first pyramid (16) and 2 levels for the second pyramid (17).

It should be mentioned that Im2 of the first alignment becomes Im1 of the second alignment, and that in the second iteration of step (b) of the method (100), the first pyramid (16) would have already been generated in the previous iteration, so only the second pyramid of Im2 of the second iteration would have to be generated.

In one embodiment, the method (100) further comprises a step prior to step (b) of correcting the plurality of satellite images (1).

In one embodiment, the method (100) comprises a step prior to step (b) of eliminating fixed noise in the plurality of satellite images (1), the step of eliminating fixed noise being carried out by means of the following sub-steps:

- determining a dark image by averaging a plurality of images acquired by the sensor (2) in the absence of illumination; and
- extracting the dark image from each of the satellite images.

In one embodiment, the method (100) further comprises a step prior to step (b) of correcting the plurality of satellite images (1) to offset a non-uniform effect on the light of the sensor (2), the step of correcting being carried out by means of the following sub-steps:

- acquiring a plurality of images of a uniformly illuminated object and extracting the dark image from each;
- determining a corrective image by averaging the plurality of images of the preceding sub-step;
- normalizing the corrective image; and
- dividing each of the satellite images without fixed noise by the normalized corrective image.

In one embodiment, the method (100) comprises a step prior to step (b) of eliminating variable noise in each image of the plurality of satellite images (1), the step of eliminating variable noise being carried out by means of the following sub-steps:

i) calculating the median of each row of the satellite image, and replacing the value of the pixels of the row exceeding a predefined threshold with the value of said median;
ii) estimating the modulus and the phase of the Fourier transform of the resultant satellite image of the preceding sub-step;
iii) calculating the median of the modulus of the Fourier transform,
iv) determining the pixels of the modulus of the Fourier transform which are outside of a predetermined radius measured from the center of said modulus of the Fourier transform;
v) replacing the values of the pixels determined in the preceding sub-step with the median calculated in sub-step iii);
vi) obtaining a smoothed satellite image by applying the inverse Fourier transform;
vii) obtaining a high-frequency image by extracting the smoothed satellite image of the satellite image;
viii) for each row of the satellite image:

- calculating the median of the corresponding row of the high-frequency image, and
- extracting said median from each pixel of the row of the satellite image.

In one embodiment, the method (100) comprises a step prior to step (b) of correcting the geometric distortion in the plurality of satellite images (1), the step of correcting geometric distortion being carried out by means of the following sub-steps:

- dividing the plurality of satellite images (1) into at least one set of satellite images, each of the sets of satellite images comprising a plurality of consecutive satellite images;
- selecting a representative image for each set of satellite images; and

for each representative image of each set of satellite images:

- estimating a representative time instant in which the sensor (2) acquired the representative image from the telemetry data (4);
- estimating the position and attitude of the satellite (3) in the representative time instant estimated from the telemetry data (4);
- calculating the pointing vectors of the pixels of the sensor (2) with respect to the inertial reference system centered on a celestial body (14) from the position and attitude of the satellite (3) in the representative time instant;
- obtaining the projection of each pixel of the sensor (2) on the surface of the celestial body (14) by calculating the intersection of the pointing vectors of the pixels of the sensor (2) with a reference geometric shape of a representative geodesic model of the celestial body (14);
- estimating the effective height of each pixel of the sensor (2) by calculating the modulus of its corresponding pointing vector, wherein the terminal point of each pointing vector is its intersection with the surface of the celestial body (14);
- calculating the ground sampling distance, GSD, of each pixel of the sensor (2), which represents the size of the projection of the pixel of the sensor (2) on the surface of the celestial body (14):

$$GSD = effective\ height \cdot \frac{pixel\ size\ of\ sensor}{focal\ length\ of\ sensor}$$

- selecting the minimum GSD from all the GSD calculated for all the pixels of the sensor (2);
- for each pixel of the sensor (2), dividing the distance between the projection of the pixel and the projection of the pixel at the center of the sensor (2) by the minimum GSD, thereby obtaining an equivalent number of pixels for said distance;
- generating a dummy image without geometric distortion from the equivalent number of pixels calculated in the preceding sub-step for each pixel of the sensor (2);
- generating a map of coordinates which defines the relationship between the pixel coordinates of the sensor (2) and the pixel coordinates of the dummy image without geometric distortion, wherein the pixel coordinates of the satellite images coincide with the pixel coordinates of the sensor (2);
- obtaining a plurality of corrected images by applying the map of coordinates to the set of satellite images, wherein

  the pixel coordinates of the corrected images coincide with the pixel coordinates of the dummy image without geometric distortion, and
  the value of each pixel of a corrected image is obtained by means of an interpolation of the pixel values of a satellite image the coordinates of which match the pixel coordinates of the corrected image according to the map of coordinates, the satellite image being part of the set of satellite images to which the representative image belongs.

In one embodiment, the method (100) further comprises a step prior to step (b) of correcting the optical and geometric distortions in the plurality of satellite images (1), the step of correcting optical and geometric distortions being carried out by means of the following sub-steps:

- receiving a distortion profile from the sensor (2) comprising:

  ∘ the position of the pixel of the sensor (2) acting as the center of optical distortion, and
  ∘ an optical distortion function indicating the optical distortion value based on the distance to the center of distortion;

- for each pixel of the sensor (2), calculating the distance of the pixel to the center of optical distortion, with the distance being measured according to a fourth preset norm, preferably the Euclidean norm;

- for each pixel of the sensor (2), calculating the optical distortion value by means of the optical distortion function and the distance calculated in the preceding sub-step; wherein the optical distortion value indicates the displacement that would have to take place in the pixel to obtain a dummy image without optical distortion;
- generating a first map of coordinates which defines the relationship between the pixel coordinates of the sensor (2) and the pixel coordinates of the dummy image without optical distortion, wherein the pixel coordinates of the image without optical distortion are calculated by adding to the pixel coordinates of the sensor (2) their corresponding optical distortion values obtained in the preceding sub-step, and wherein the pixel coordinates of the satellite images (1) coincide with the pixel coordinates of the sensor (2);
- dividing the plurality of satellite images (1) into at least one set of satellite images, each of the sets of satellite images comprising a plurality of consecutive satellite images;
- selecting a representative image for each set of satellite images; and

for each representative image of each set of satellite images:

- estimating a representative time instant in which the sensor (2) acquired the representative image from the telemetry data (4);
- estimating the position and attitude of the satellite (3) in the representative time instant estimated from the telemetry data (4);
- calculating the pointing vectors of the pixels of the sensor (2) with respect to the inertial reference system centered on the celestial body (14) from the position and attitude of the satellite (3) in the representative time instant;
- obtaining the projection of each pixel of the sensor (2) on the surface of the celestial body (14) by calculating the intersection of the pointing vectors of the pixels of the sensor (2) with a reference geometric shape of a representative geodesic model of the celestial body;
- estimating the effective height of each pixel of the sensor (2) by calculating the modulus of its corresponding pointing vector, wherein the terminal point of each pointing vector is its intersection with the surface of the celestial body;
- calculating the ground sampling distance, GSD, of each pixel of the sensor (2), which represents the size of the projection of the pixel of the sensor (2) on the surface of the celestial body:

$$GSD = effective\ height \cdot \frac{pixel\ size\ of\ sensor}{focal\ length\ of\ sensor}$$

- selecting the minimum GSD from all the GSD calculated for all the pixels of the sensor (2);
- for each pixel of the sensor (2), dividing the distance between the projection of the pixel and the projection of the pixel at the center of the sensor (2) by the minimum GSD, thereby obtaining an equivalent number of pixels for said distance;
- generating a dummy image without optical and geometric distortions from the equivalent number of pixels calculated in the preceding sub-step for each pixel of the sensor (2);
- generating a second map of coordinates which defines the relationship between the pixel coordinates of a dummy image without optical distortion and with geometric distortion, and the pixel coordinates of the dummy image without generated optical and geometric distortions; wherein

the pixel coordinates of the dummy image without optical distortion and with geometric distortion coincide with the pixel coordinates of the sensor (2) and with the pixel coordinates of the satellite images (1), and
it is assumed that said image is free of optical distortion;

- generating a combined map of coordinates, which defines the relationship between the pixel coordinates of the dummy image without optical and geometric distortions, and the pixel coordinates of the sensor (2), wherein:

(i) by evaluating the second map of coordinates, the pixel coordinates of the dummy image without optical distortion and with geometric distortion matching the pixel coordinates of the dummy image without optical and geometric distortions are identified;
(ii) by evaluating the first map of coordinates, the pixel coordinates of the dummy image without optical distortion matching the pixel coordinates of the dummy image without optical distortion and with geometric distortion identified in step (i) are estimated by interpolation,
(iii) by evaluating the first map of coordinates, the pixel coordinates of the sensor (2) that correspond with the pixel coordinates of the dummy image without optical distortion estimated in step (ii) are determined by interpolation; and

(iv) the combined map of coordinates is generated by establishing the relationship between the pixel coordinates of the sensor (2) determined in step (iii) and the pixel coordinates of the dummy image without optical and geometric distortions; and

- obtaining a plurality of corrected images by applying the combined map of coordinates to the set of satellite images, wherein

the pixel coordinates of the corrected images coincide with the pixel coordinates of the dummy image without optical and geometric distortions, and

the value of each pixel of a corrected image is obtained by combining the values of the pixels of a satellite image the coordinates of which match the pixel coordinates of the corrected image according to the combined map of coordinates, the satellite image being part of the set of satellite images to which the representative image belongs.

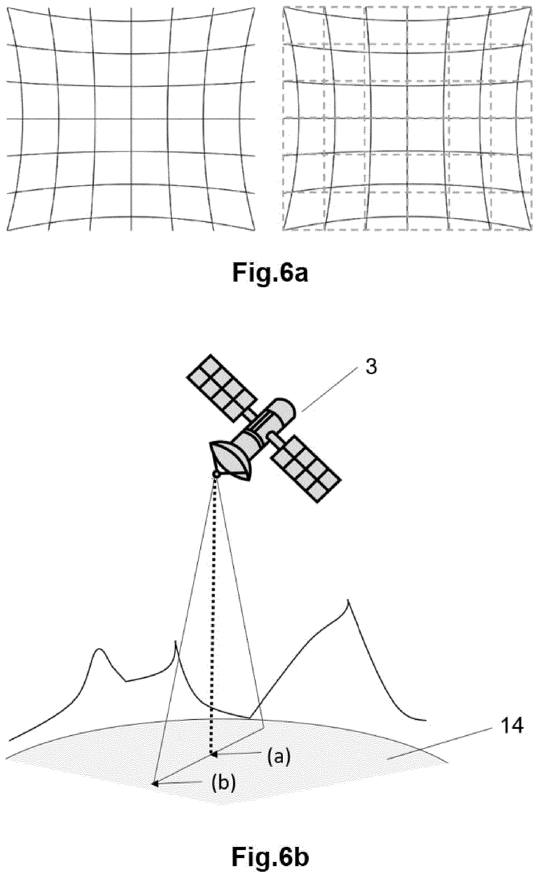

Figures 6a-6c show optical distortion and geometric distortion effects in satellite images (1).

Figure 6a (image on the left) shows a pincushion-type optical distortion, in which magnification of the satellite image (1) increases with distance from the optical axis. The visible effect is that lines that do not pass through the center of the image (1) curve inwardly towards the center of the image (1). In this way, the correction of such distortion according to the preceding embodiments involves correcting the effect of the magnification such that the lines do not curve inwardly, as can be seen in the image on the right of Figure 6a in a dashed line.

In turn, the geometric distortion of the satellite images (1) of a celestial body (14) occurs due to the location of the sensor (2) in relation to the surface of the celestial body (14) at the acquisition time. Figure 6b shows how in images taken very off-nadir (that is, images in which there are parts of the surface to be photographed which are not located directly below the sensor, but rather deviated at a certain angle, such as point (b) in Figure 6b), the actual distance possibly existing between two objects found in neighboring pixels varies greatly.

Geometric distortion translates into the images (1) having a different GSD depending on whether the pixel of the sensor (2) is located nadir (point (a) in Figure 6b) or very off-nadir (point (b) in Figure 6b).

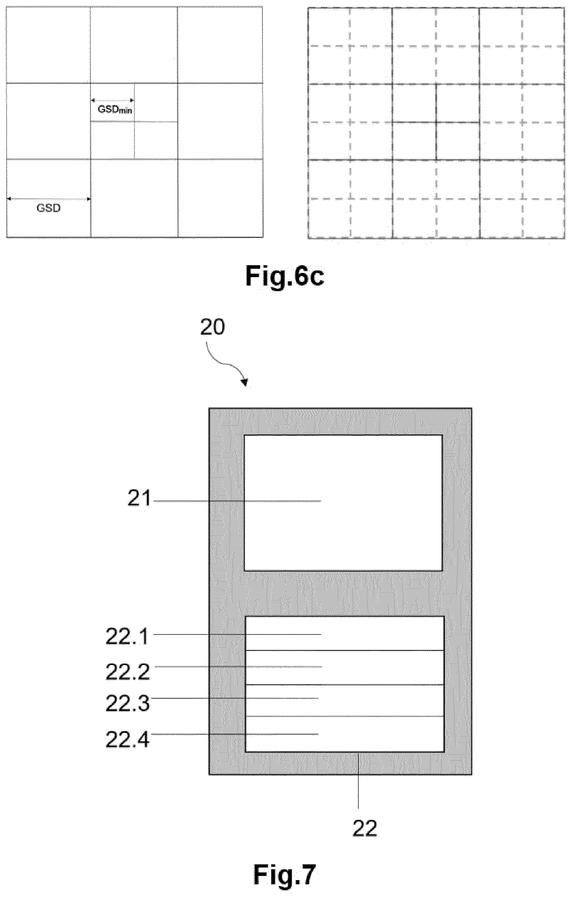

Figure 6c (left) shows a simplified diagram of GSD variations depending on the location of each pixel of the sensor (2).

Therefore, correction of geometric distortion consists of creating a new image (image on the right in Figure 6c) in which the distance represented by each pixel is constant. The number of pixels of the corrected image will be greater than the number of pixels of the satellite image (1), with said number being greater the more off-nadir it was when acquiring the image.

In an embodiment of the method (100):

- the estimate of the first time instant in which the sensor (2) acquired the first satellite image (1.1) is carried out by interpolating the plurality of telemetry time instants (4); and/or
- the estimate of the second time instant in which the sensor (2) acquired the second satellite image (1.2) is carried out by interpolating the plurality of telemetry time instants (4); and/or
- the estimate of the representative time instant in which the sensor (2) acquired the representative satellite image is carried out by interpolating the plurality of telemetry time instants (4); and/or
- the estimate of the position and attitude of the satellite (3) in the estimated first time instant, and/or in the estimated second time instant, and/or in the estimated representative time instant is carried out by interpolating the plurality of positions and attitudes of the satellite (3) of the telemetry data (4).

Figure 7 shows a system (20) for processing satellite images (1) according to an embodiment of the invention. The system (20) for processing satellite images (1) comprises a processor (22) configured to carry out steps (e.2) and (e.3) of the method and a field-programmable gate array (21), FPGA, configured to carry out the rest of the steps of the method.

In one embodiment, the FPGA (21) is further configured to carry out, in parallel:

- at least one of the sub-steps of step (b) of the method; and/or
- step (c) of the method; and/or
- step (d) of the method; and/or
- at least one of the sub-steps of step (e) of the method.

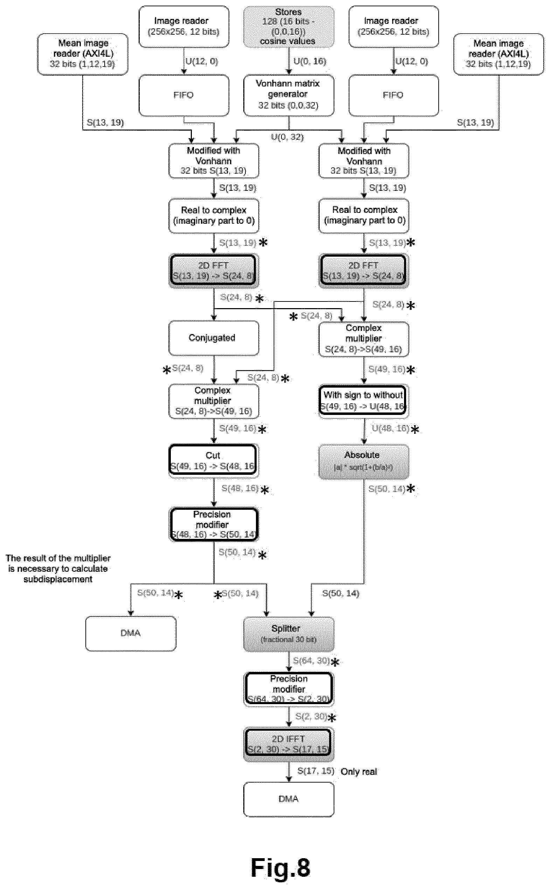

Figure 8 shows a diagram of the architecture of the FPGA (21) of the system (20) for aligning a pair of satellite images (1.1, 1.2) according to an embodiment of the invention.

In this figure, the complex numbers are shown followed or preceded by an asterisk. The rest of the numbers are real numbers.

In this figure, the double-edge modules can have an overflow.

The FPGA (21) of the embodiment shown in this Figure 8 comprises a direct memory access, DMA, module configured to access the pair of images (1.1, 1.2) to be aligned and a direct memory access, DMA, writing module configured to store, in a storage element, the displacement calculated by the FPGA (21) during the alignment of a pair of images (1.1, 1.2).

In one embodiment, the storage element is a memory, a disk, or a database which is in communication with the FPGA (21). In one embodiment, the storage element is a DDR memory (double data rate memory).

In the embodiment shown in Figure 8, the FPGA (21) determines the displacement by minimizing a linear cross-correlation between the first satellite image (1.1) and the second satellite image (1.2) to be aligned. In this way, the FPGA (21) comprises a cross-correlation module configured to carry out a linear cross-correlation between the images (1.1, 1.2). In particular, the cross-correlation module comprises a plurality of sub-modules configured to perform the operations required by the cross-correlation; for example, a module which applies a Vonhann matrix, a module which calculates the two-dimensional Fourier transform, or a complex number multiplier module.

Additionally, the FPGA (21) comprises modules for adjusting the precision of the integer part and of the fractional part of the result of each operation that it executes.

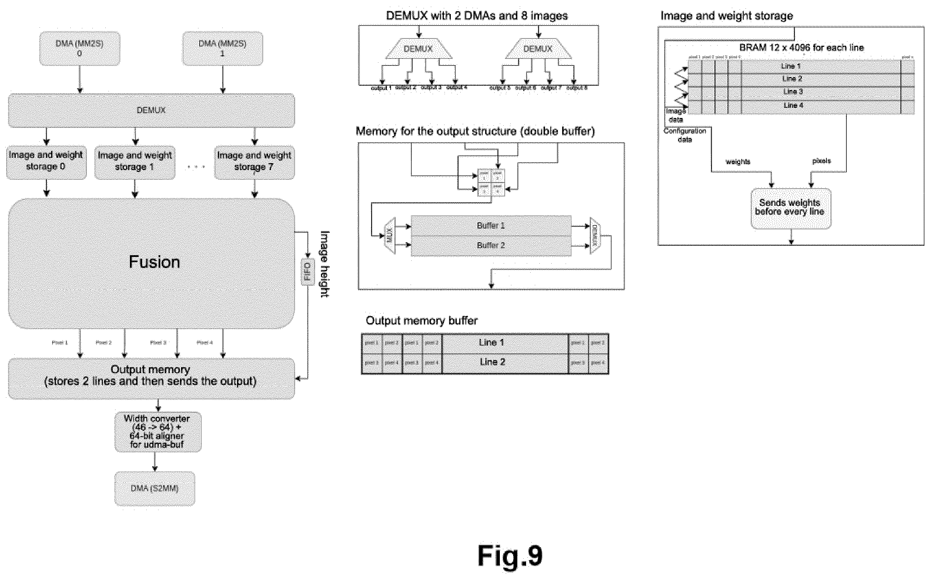

Figure 9 (left) shows a diagram of the architecture of the FPGA (21) of the system (20) for obtaining the oversampled fused image (13) according to an embodiment of the invention.

For this fusion operation, the FPGA (21) comprises two direct memory access, DMA, modules configured to access the reference image (10) and the set of common regions (11) previously stored in the storage element of the system (20).

The FPGA (21) further comprises a demultiplexer, a plurality of image and weight storage modules, and a fusing module, wherein:

the demultiplexer is configured to receive, by means of the at least one memory access module, DMA, the reference image (10) and the set of common regions (11) together with the weights estimated in sub-step (e.3) of the method (100) by the processor (22);
each image and weight storage module is configured to store and send the reference image (10) or a common region of the set of common regions (11) together with the weights thereof to the fusing module; and
the fusing module is configured to receive the weights and to receive and fuse the reference image (10) and the set of common regions (11) based on said weights.

In one embodiment, each image and weight storage module is configured to store a plurality of rows of the reference image (10) or of a common region (11), and to send to the fusing module part of the plurality of rows of the reference image (10) or of the common region (11) while temporarily storing the rest of the rows.

In one embodiment, the image and weight storage modules are configured to perform sending to the fusing module at the same time.

Figure 9 shows that the image and weight storage modules store four rows and send three rows to the fusing module together with the corresponding weights for the pixels of the reference image (10) and of the set of common regions (11) to be fused. The number of pixels of the reference image (10) and of the set of common regions (11) contributing to the generation of a single pixel of the oversampled fused image is configurable. In the example of Figure 9, in the same clock cycle, four pixels of the oversampled fused image are calculated in parallel.

The FPGA (21) of Figure 9 further comprises an output memory comprising a plurality of RAM memory blocks, for example BRAMs, configured to store two lines of the oversampled fused image and to send said lines to the processor; for example, for storing the oversampled fused image in a storage element or sending it to an additional module of the system or to a receiver located on Earth.

The FPGA (21) of Figure 9 further comprises a special width converter configured to change the data width of the communication interface used, in this case AXI Stream, to transition from 48-bit input (4 pixels * 12 bits) to 64-bit output, a data size that is compatible with the sizes supported by a DMA module to which said special width converter is connected.

The FPGA (21) of Figure 9 further comprises a direct memory access, DMA, writing module configured to send the oversampled fused image to a processor.

Figure 9 (center and right) shows in detail the demultiplexer, the image and weight storage modules, the structure of the output memory, and the buffer of the output memory.

The system (20) of Figure 7 further comprises a processor (22) comprising at least one of the following threads:

- a first thread (22.1) configured to carry out the steps of correcting fixed noise, and/or variable noise, and/or the step of flat correction of the method (100); or
- a second thread (22.2) configured to carry out the step of correcting optical distortion of the method (100) or the step of correcting optical and geometric distortions of the method (100); or

- a third thread (22.3) configured to carry out the step of correcting geometric distortion of the method (100) or the step of correcting optical and geometric distortions of the method (100); or
- a fourth thread (22.4) to order the FPGA to execute steps (a)-(e) of the method (100); or
- a combination of any of the above; and

wherein the threads of the processor (3) are further configured to carry out the steps in parallel.

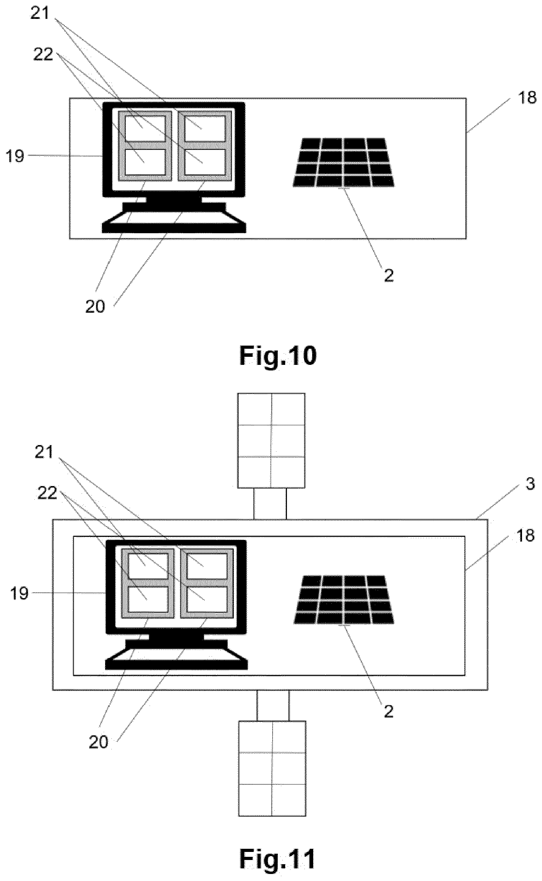

Figure 10 shows a camera (18) for observing celestial bodies (14) comprising:

- a computer (19) comprising two systems (20) such as the one shown in Figure 7 (although this number can be greater or smaller); and
- a sensor (2) configured to acquire a plurality of satellite images (1).

Figure 11 shows a satellite (3) comprising the camera (19) for observing celestial bodies (14) shown in Figure 10.

## Claims

1. Computer-implemented method (100) for processing satellite images (1), the method comprising the steps of:

(a) receiving a plurality of satellite images (1) acquired by a sensor (2) on board a satellite (3) and telemetry data (4), the telemetry data (4) comprising a plurality of positions and attitudes of the satellite (3) with respect to an inertial reference system centered on a celestial body (14) in a plurality of telemetry time instants;
(b) aligning a pair of consecutive satellite images of the plurality of satellite images (1) by carrying out the following sub-steps:

(b.1) selecting a first satellite image (1.1) and a second satellite image (1.2) to be aligned,
(b.2) calculating an initial horizontal displacement (8.1) and an initial vertical displacement (8.2) of the second satellite image (1.2) with respect to the first satellite image (1.1) by:

- estimating a first time instant in which the sensor (2) acquired the first satellite image (1.1) from the telemetry data (4);
- estimating the position and attitude of the satellite (3) in the first time instant estimated from the telemetry data (4);
- estimating a second time instant in which the sensor (2) acquired the second satellite image (1.2) from the telemetry data (4);
- estimating the position and attitude of the satellite (3) in the second time instant estimated from the telemetry data (4);
- calculating the initial horizontal displacement (8.1) and the initial vertical displacement (8.2) from the positions and attitudes of the satellite (3) in the first time instant and in the second time instant;

(b.3) based on the initial horizontal displacement (8.1) and the initial vertical displacement (8.2), calculating the total horizontal displacement (9.1) and the total vertical displacement (9.2) that must be applied to the second satellite image (1.2) to minimize the distance between said second satellite image (1.2) and the first satellite image (1.1), with the distance being measured according to a first preset norm, preferably the Euclidean norm;
(b.4) aligning the first satellite image (1.1) and the second satellite image (1.2) by applying the total horizontal displacement (9.1) and the total vertical displacement (9.2) to the second satellite image (1.2);

(c) repeating step (b) for all the pairs of consecutive satellite images of the plurality of satellite images (1), wherein in each iteration of step (b):

- the first satellite image (1.1) selected in sub-step (b.1) corresponds with the second satellite image (1.2) of the previous iteration;
- the total horizontal displacement (9.1) obtained in sub-step (b.3) of the previous iteration must be added to the total horizontal displacement (9.1) obtained in sub-step (b.3); and
- the total vertical displacement (9.2) obtained in sub-step (b.3) of the previous iteration must be added to the total vertical displacement (9.2) obtained in sub-step (b.3);

(d) selecting the first satellite image (1.1) selected in sub-step (b.1) of the first iteration of step (b) as a reference image (10), and
obtaining at least one common region between the reference image (10) and each of the second satellite images (1.2) displaced in sub-step (b.4) of all the iterations of step (b), resulting in a set of common regions (11);
(e) obtaining an oversampled fused image (13) by fusing the reference image (10) and the set of common regions (11) by carrying out the following sub-steps:

> (e.1) generating an oversampled image (12), wherein the resolution of the oversampled image (12) is the resolution of the reference image (10) multiplied by a predefined oversampling factor;
> (e.2) for each pixel (12.1) of the oversampled image (12), determining the distance from the center of said pixel (12.1) to the center of at least one pixel of each region of the set of regions (11) and to the center of at least one pixel of the reference image (10), wherein the distance is measured according to a second preset norm, preferably the Euclidean norm;
> (e.3) for each pixel (12.1) of the oversampled image (12.1), estimating a weight for the at least one pixel of each region of the set of regions (11) and for the at least one pixel of the reference image (10) based on the determined distances; and
> (e.4) obtaining the oversampled fused image (13), wherein the value of each pixel (13.1) of the oversampled fused image (13) is the sum of the values of the at least one pixel of each region of the set of regions (11) and of the at least one pixel of the reference image (10) weighted based on the weights estimated in the preceding sub-step.

2. Method (100) according to the preceding claim, wherein in sub-step (b.2) the calculation of the initial horizontal displacement (8.1) and the initial vertical displacement (8.2) from the positions and attitudes of the satellite (3) in the first time instant and in the second time instant is performed by means of the following sub-steps:

> (1) in the first iteration of step (b), for each pair of consecutive telemetry time instants, $t_{tel1}$ and $t_{tel2}$, of the telemetry data (4):

> > - calculating the pointing vectors of the pixel at the center of the sensor (2) and of at least two pixels of two segments of the sensor (2), which are perpendicular to one another and intersect at the center of the sensor (2), with respect to the inertial reference system from the position and attitude of the satellite (3) in the first telemetry time instant, $t_{tel1}$, and in the second telemetry time instant, $t_{tel2}$;
> > - obtaining the projection of the pixel at the center of the sensor (2) and of the at least two pixels of the segments of the sensor (2) on the surface of the celestial body (14) by calculating the intersection of the pointing vectors of said pixels with a reference geometric shape of a representative geodesic model of the celestial body (14);
> > - defining a projected reference system (15) as the projection of the at least two pixels of the segments of the sensor (2) and the projection of the pixel at the center of the sensor (2) on the surface of the celestial body (14) assuming that:

> > > ∘ the surface of the celestial body (14) is flat;
> > > ∘ the projected reference system (15) is an orthogonal reference system made up of the projections of the pixels of the segments of the sensor (2) and the projection of the pixel at the center of the sensor (2); and
> > > ∘ the projection of the pixel at the center of the sensor (2) is the center of the projected reference system (15);

> > - for the pixel at the center of the sensor (2):

> > > calculating the effective height as the modulus of its pointing vector, wherein the terminal point of the pointing vector is its intersection with the surface of the celestial body (14), and
> > > calculating the ground sampling distance, GSD, which represents the size of the projection of the pixel at the center of the sensor (2) on the surface of the celestial body (14):

$$GSD = effective\ height \cdot \frac{pixel\ size\ of\ sensor}{focal\ length\ of\ sensor}$$

> > - calculating a first linear velocity, $\vec{v_1}$, of the projection of the pixel at the center of the sensor (2) due to the rotation of the celestial body (14), wherein

the first linear velocity $\vec{v_1}$ is referenced in the inertial reference system, and
the first linear velocity $\vec{v_1}$ is calculated from the angular velocity, $\vec{\omega}$, of the celestial body (14) and from the perpendicular distance from the projection of the pixel at the center of the sensor to the axis of rotation of the celestial body (14), $\vec{R}$:

$$\vec{v_1} = \vec{\omega} \; x \; \vec{R}$$

where $\vec{\omega}$ and $\vec{R}$ are vectors referenced in the inertial reference system;

- calculating a second linear velocity, $\vec{v_2}$, of the projection of the pixel at the center of the sensor (2) due to the movement of the satellite (3):

$$\vec{v_2} = \frac{\vec{pos_2} - \vec{pos_1}}{t_{tel2} - t_{tel1}}$$

where:

○ $\vec{pos_2}$ is the position vector of the projection of the pixel at the center of the sensor (2) in the second telemetry time instant, $t_{tel2}$, the vector being referenced in the inertial reference system; and
○ $\vec{pos_1}$ is the position vector of the projection of the pixel at the center of the sensor (2) in the first telemetry time instant, $t_{tel1}$, the vector being referenced in the inertial reference system; and
○ $\vec{v_2}$ is referenced in the inertial reference system;

- calculating the total linear velocity, $\vec{v_T}$, of the projection of the pixel at the center of the sensor (2) in pixels per second:

$$\vec{v_T} = \frac{\vec{v_1} + \vec{v_2}}{GSD}$$

- referencing the total linear velocity $\vec{v_T}$ obtained in the preceding sub-step in the projected reference system (15);

(2) in the first iteration of step (b), calculating the horizontal linear velocity, $v_H(t)$, and the vertical linear velocity, $v_V(t)$, as a function of time by interpolating the horizontal and vertical components of the total linear velocities, $\vec{v_T}$, obtained for all the pairs of consecutive telemetry time instants; and
(3) in any iteration of step (b), for the pair of consecutive satellite images to be aligned, estimating the initial horizontal displacement (8.1) and the initial vertical displacement (8.2) by integrating the horizontal and vertical linear velocities as a function of time, $v_H(t)$ and $v_V(t)$, respectively, between the first time instant and the second time instant.

3. Method (100) according to any of the preceding claims, wherein sub-step (b.3) is carried out by means of the following sub-steps:

(b.3.i) for the first satellite image (1.1), generating a first image pyramid (16) by subsampling the first satellite image (1.1) with N predefined subsampling factors, where N is greater than or equal to one, wherein the first image pyramid (16) comprises N+1 levels, and wherein:

• the first level of the first image pyramid (16) comprises the first satellite image (1.1), and
• the i-th level of the first image pyramid (16) comprises an image subsampled from the first satellite image (1.1) with the k-th subsampling factor, where i = 2,... ,N+1 and k = i-1;

(b.3.ii) for the second satellite image (1.2), generating a second image pyramid (17) by subsampling the second satellite image (1.2) with M predefined subsampling factors, where M is greater than or equal to one, wherein the second image pyramid (17) comprises M+1 levels, and wherein:

- M is less than or equal to N,
- the first level of the second image pyramid (17) comprises the second satellite image (1.2), and
- the j-th level of the second image pyramid (17) comprises a subsampled image (1.2') from the second satellite image (1.2) with the m-th subsampling factor, where j = 2,... ,M+1 and m = j-1;

(b.3.iii) based on the initial horizontal displacement (8.1) and the initial vertical displacement (8.2), determining the horizontal displacement and the vertical displacement that must be applied to the image of the M+1 level of the second image pyramid (17) to minimize the distance between said image and the image of the first image pyramid (16) of the same level, with the distance being measured according to a third preset norm, preferably the Euclidean norm;

(b.3.iv) based on the horizontal displacement and the vertical displacement determined in the preceding sub-step, determining the horizontal displacement and the vertical displacement that must be applied to the image of the lower level of the second image pyramid (17) to minimize the distance between said image and the image of the first image pyramid (16) of the same level, with the distance being measured according to the third preset norm, and wherein:

- if said lower level is level 1 of the second image pyramid (17), establishing the horizontal displacement as total horizontal displacement (9.1) and the vertical displacement as total vertical displacement (9.2); or
- if said lower level is not level 1 of the second image pyramid (17), repeating step (b.3.iv).

4. Method (100) according to any of the preceding claims, further comprising a step prior to step (b) of eliminating fixed noise in the plurality of satellite images (1), the step of eliminating fixed noise being carried out by means of the following sub-steps:

- determining a dark image by averaging a plurality of images acquired by the sensor (2) in the absence of illumination; and
- extracting the dark image from each of the satellite images.

5. Method (100) according to the preceding claim, further comprising a step prior to step (b) of correcting the plurality of satellite images (1) to offset a non-uniform effect on the light of the sensor (2), the step of correcting being carried out by means of the following sub-steps:

- acquiring a plurality of images of a uniformly illuminated object and extracting the dark image from each one;
- determining a corrective image by averaging the plurality of images of the preceding sub-step;
- normalizing the corrective image; and
- dividing each of the satellite images without fixed noise by the normalized corrective image.

6. Method (100) according to any of the preceding claims, further comprising a step prior to step (b) of eliminating variable noise in each image of the plurality of satellite images (1), the step of eliminating variable noise being carried out by means of the following sub-steps:

i) calculating the median of each row of the satellite image, and replacing the value of the pixels of the row exceeding a predefined threshold with the value of said median;
ii) estimating the modulus and the phase of the Fourier transform of the resultant satellite image of the preceding sub-step;
iii) calculating the median of the modulus of the Fourier transform,
iv) determining the pixels of the modulus of the Fourier transform which are outside of a predetermined radius measured from the center of said modulus of the Fourier transform;
v) replacing the values of the pixels determined in the preceding sub-step with the median calculated in sub-step iii);
vi) obtaining a smoothed satellite image by applying the inverse Fourier transform;
vii) obtaining a high-frequency image by extracting the smoothed satellite image of the satellite image;
viii) for each row of the satellite image:

- calculating the median of the corresponding row of the high-frequency image, and
- extracting said median from each pixel of the row of the satellite image.

7. Method (100) according to any of the preceding claims, further comprising a step prior to step (b) of correcting the optical distortion in the plurality of satellite images (1), the step of correcting optical distortion being carried out by means of the following sub-steps:

- receiving a distortion profile from the sensor (2) comprising:

∘ the position of the pixel of the sensor (2) acting as the center of optical distortion, and
∘ an optical distortion function indicating the optical distortion value based on the distance to the center of distortion;

- for each pixel of the sensor (2), calculating the distance of the pixel to the center of optical distortion, with the distance being measured according to a fourth preset norm, preferably the Euclidean norm;
- for each pixel of the sensor (2), calculating the optical distortion value by means of the optical distortion function and the distance calculated in the preceding sub-step; wherein the optical distortion value indicates the displacement that would have to take place in the pixel to obtain a dummy image without optical distortion;
- generating a map of coordinates which defines the relationship between the pixel coordinates of the sensor (2) and the pixel coordinates of the dummy image without optical distortion, wherein the pixel coordinates of the dummy image without optical distortion are calculated by adding to the pixel coordinates of the sensor (2) their corresponding optical distortion values obtained in the preceding sub-step, and wherein the pixel coordinates of the satellite images (1) coincide with the pixel coordinates of the sensor (2);
- obtaining a plurality of corrected images by applying the map of coordinates to the plurality of satellite images (1), wherein

the pixel coordinates of the corrected images coincide with the pixel coordinates of the dummy image without optical distortion, and
the value of each pixel of a corrected image is obtained by means of an interpolation of the pixel values of a satellite image the coordinates of which match the pixel coordinates of the corrected image according to the map of coordinates.

8. Method (100) according to the preceding claim, further comprising a step prior to step (b) of correcting the geometric distortion in the plurality of satellite images (1), the step of correcting geometric distortion being carried out by means of the following sub-steps:

- dividing the plurality of satellite images (1) into at least one set of satellite images, each of the sets of satellite images comprising a plurality of consecutive satellite images;
- selecting a representative image for each set of satellite images; and

for each representative image of each set of satellite images:

- estimating a representative time instant in which the sensor (2) acquired the representative image from the telemetry data (4);
- estimating the position and attitude of the satellite (3) in the representative time instant estimated from the telemetry data (4);
- calculating the pointing vectors of the pixels of the sensor (2) with respect to the inertial reference system centered on a celestial body (14) from the position and attitude of the satellite (3) in the representative time instant;
- obtaining the projection of each pixel of the sensor (2) on the surface of the celestial body (14) by calculating the intersection of the pointing vectors of the pixels of the sensor (2) with a reference geometric shape of a representative geodesic model of the celestial body (14);
- estimating the effective height of each pixel of the sensor (2) by calculating the modulus of its corresponding pointing vector, wherein the terminal point of each pointing vector is its intersection with the surface of the celestial body (14);
- calculating the ground sampling distance, GSD, of each pixel of the sensor (2), which represents the size of the projection of the pixel of the sensor (2) on the surface of the celestial body (14):

$$GSD = effective\ height \cdot \frac{pixel\ size\ of\ sensor}{focal\ length\ of\ sensor}$$

- selecting the minimum GSD from all the GSD calculated for all the pixels of the sensor (2);
- for each pixel of the sensor (2), dividing the distance between the projection of the pixel and the projection of the pixel at the center of the sensor (2) by the minimum GSD, thereby obtaining an equivalent number of pixels for said distance;
- generating a dummy image without geometric distortion from the equivalent number of pixels calculated in the preceding sub-step for each pixel of the sensor (2);
- generating a map of coordinates which defines the relationship between the pixel coordinates of the sensor (2) and the pixel coordinates of the dummy image without geometric distortion, wherein the pixel coordinates of the satellite images coincide with the pixel coordinates of the sensor (2);
- obtaining a plurality of corrected images by applying the map of coordinates to the set of satellite images, wherein

the pixel coordinates of the corrected images coincide with the pixel coordinates of the dummy image without geometric distortion, and

the value of each pixel of a corrected image is obtained by means of an interpolation of the pixel values of a satellite image the coordinates of which match the pixel coordinates of the corrected image according to the map of coordinates, the satellite image being part of the set of satellite images to which the representative image belongs.

9. Method (100) according to any of claims 1 to 6, further comprising a step prior to step (b) of correcting the optical and geometric distortions in the plurality of satellite images (1), the step of correcting optical and geometric distortions being carried out by means of the following sub-steps:

- receiving a distortion profile from the sensor (2) comprising:

  ∘ the position of the pixel of the sensor (2) acting as the center of optical distortion, and
  ∘ an optical distortion function indicating the optical distortion value based on the distance to the center of distortion;

- for each pixel of the sensor (2), calculating the distance of the pixel to the center of optical distortion, with the distance being measured according to a fourth preset norm, preferably the Euclidean norm;
- for each pixel of the sensor (2), calculating the optical distortion value by means of the optical distortion function and the distance calculated in the preceding sub-step; wherein the optical distortion value indicates the displacement that would have to take place in the pixel to obtain a dummy image without optical distortion;
- generating a first map of coordinates which defines the relationship between the pixel coordinates of the sensor (2) and the pixel coordinates of the dummy image without optical distortion, wherein the pixel coordinates of the image without optical distortion are calculated by adding to the pixel coordinates of the sensor (2) their corresponding optical distortion values obtained in the preceding sub-step, and wherein the pixel coordinates of the satellite images (1) coincide with the pixel coordinates of the sensor (2);
- dividing the plurality of satellite images (1) into at least one set of satellite images, each of the sets of satellite images comprising a plurality of consecutive satellite images;
- selecting a representative image for each set of satellite images; and

for each representative image of each set of satellite images:

- estimating a representative time instant in which the sensor (2) acquired the representative image from the telemetry data (4);
- estimating the position and attitude of the satellite (3) in the representative time instant estimated from the telemetry data (4);
- calculating the pointing vectors of the pixels of the sensor (2) with respect to the inertial reference system centered on the celestial body (14) from the position and attitude of the satellite (3) in the representative time instant;
- obtaining the projection of each pixel of the sensor (2) on the surface of the celestial body (14) by calculating the intersection of the pointing vectors of the pixels of the sensor (2) with a reference geometric shape of a representative geodesic model of the celestial body;
- estimating the effective height of each pixel of the sensor (2) by calculating the modulus of its corresponding pointing vector, wherein the terminal point of each pointing vector is its intersection with the surface of the celestial body (14);
- calculating the ground sampling distance, GSD, of each pixel of the sensor (2), which represents the size of the projection of the pixel of the sensor (2) on the surface of the celestial body:

$$GSD = effective\ height \cdot \frac{pixel\ size\ of\ sensor}{focal\ length\ of\ sensor}$$

- selecting the minimum GSD from all the GSD calculated for all the pixels of the sensor (2);
- for each pixel of the sensor (2), dividing the distance between the projection of the pixel and the projection of the pixel at the center of the sensor (2) by the minimum GSD, thereby obtaining an equivalent number of pixels for said distance;
- generating a dummy image without optical and geometric distortions from the equivalent number of pixels calculated in the preceding sub-step for each pixel of the sensor (2);
- generating a second map of coordinates which defines the relationship between the pixel coordinates of a dummy image without optical distortion and with geometric distortion, and the pixel coordinates of the dummy image without generated optical and geometric distortions; wherein

the pixel coordinates of the dummy image without optical distortion and with geometric distortion coincide with the pixel coordinates of the sensor (2) and with the pixel coordinates of the satellite images (1), and it is assumed that said image is free of optical distortion;

- generating a combined map of coordinates, which defines the relationship between the pixel coordinates of the dummy image without optical and geometric distortions, and the pixel coordinates of the sensor (2), wherein:

(i) by evaluating the second map of coordinates, the pixel coordinates of the dummy image without optical distortion and with geometric distortion matching the pixel coordinates of the dummy image without optical and geometric distortions are identified;
(ii) by evaluating the first map of coordinates, the pixel coordinates of the dummy image without optical distortion matching the pixel coordinates of the dummy image without optical distortion and with geometric distortion identified in step (i) are estimated by interpolation,
(iii) by evaluating the first map of coordinates, the pixel coordinates of the sensor (2) that correspond with the pixel coordinates of the dummy image without optical distortion estimated in step (ii) are determined by interpolation; and
(iv) the combined map of coordinates is generated by establishing the relationship between the pixel coordinates of the sensor (2) determined in step (iii) and the pixel coordinates of the dummy image without optical and geometric distortions; and

- obtaining a plurality of corrected images by applying the combined map of coordinates to the set of satellite images, wherein

the pixel coordinates of the corrected images coincide with the pixel coordinates of the dummy image without optical and geometric distortions, and
the value of each pixel of a corrected image is obtained by combining the values of the pixels of a satellite image the coordinates of which match the pixel coordinates of the corrected image according to the combined map of coordinates, the satellite image being part of the set of satellite images to which the representative image belongs.

**10.** Method (100) according to any of the preceding claims, wherein

- the estimate of the first time instant in which the sensor (2) acquired the first satellite image (1.1) is carried out by interpolating the plurality of telemetry time instants (4); and/or
- the estimate of the second time instant in which the sensor (2) acquired the second satellite image (1.2) is carried out by interpolating the plurality of telemetry time instants (4); and/or
- the estimate of the representative time instant in which the sensor (2) acquired the representative satellite image is carried out by interpolating the plurality of telemetry time instants (4); and/or
- the estimate of the position and attitude of the satellite (3) in the estimated first time instant, and/or in the estimated second time instant, and/or in the estimated representative time instant is carried out by interpolating the plurality of positions and attitudes of the satellite (3) of the telemetry data (4).

11. System (20) for processing satellite images comprising a processor (22) configured to carry out steps (e.2) and (e.3) of the method according to claims 1 to 3 or 10; and a field-programmable gate array (21), FPGA, configured to carry out the rest of the steps of the method according to claims 1 to 3 or 10.

12. System (20) according to the preceding claim, wherein the FPGA (21) is further configured to carry out, in parallel:

    - at least one of the sub-steps of step (b) of the method; and/or
    - step (c) of the method; and/or
    - step (d) of the method; and/or
    - at least one of the sub-steps of step (e) of the method.

13. System (20) according to any of claims 11 or 12, wherein the processor (22) comprises at least one of the following threads:

    - a first thread (22.1) configured to carry out the steps of correcting of the method according to any of claims 4 to 6; or
    - a second thread (22.2) configured to carry out the step of correcting of the method according to claim 7 or 9; or
    - a third thread (22.3) configured to carry out the step of correcting of the method according to claim 8 or 9; or
    - a fourth thread (22.4) to order the FPGA to execute the steps of the method according to any of claims 1 to 3; or
    - a combination of any of the above; and

    wherein the threads of the processor (3) are further configured to carry out the steps in parallel.

14. Camera (18) for observing celestial bodies comprising:

    - a computer (19) comprising at least one system (20) according to claims 11-13; and
    - a sensor (2) configured to acquire a plurality of satellite images (1).

15. Satellite (3) comprising the camera (19) for observing celestial bodies according to claim 14.

**Fig.1**

EP 4 687 094 A1

**Fig.2**

**Fig.3**

**Fig.4a**

**Fig.4b**

**Fig.5**

**Fig.6a**

**Fig.6b**

## Fig.6c

20

21

22.1

22.2

22.3

22.4

22

## Fig.7

Fig.8

Fig.9

46

**Fig.10**

**Fig.11**

Europäisches
Patentamt

European
Patent Office

Office européen
des brevets

## EUROPEAN SEARCH REPORT

**Application Number**

EP 24 38 2851

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ABHILASHA BHATIA ET AL: "Sensor and computing resource management for a small satellite", AEROSPACE CONFERENCE, 2013 IEEE, IEEE, 2 March 2013 (2013-03-02), pages 1-8, XP032397286, DOI: 10.1109/AERO.2013.6497398 ISBN: 978-1-4673-1812-9 * Sec. 1,3; Fig. 1,2 * | 1-15 | INV. G06T3/4038 G06T3/4053 G06T5/50 |
| A | CN 115 082 310 A (ECOLOGICAL ENVIRONMENT MONITORING AND SCIENT RESEARCH CENTER OF YANGTZ) 20 September 2022 (2022-09-20) * Passages w.r.t. to combining unit 605 and alignment unit 603 * | 1-15 | |
| A | CN 108 090 869 B (CHINA ACADEMY SPACE TECHNOLOGY) 9 July 2021 (2021-07-09) * Passages w.r.t. steps 6-8 * | 1-15 | |
| A | CN 110 032 963 A (UNIV CAPITAL NORMAL) 19 July 2019 (2019-07-19) * the whole document * | 1-15 | TECHNICAL FIELDS SEARCHED (IPC) G06T |
| A | US 2014/043505 A1 (QIAN SHEN-EN [CA]) 13 February 2014 (2014-02-13) * paragraphs [0003], [0005], [0006], [0052], [0069] * | 1-15 | |
| A | US 2018/268239 A1 (COULTER LLOYD LAWRENCE ARTHUR [US] ET AL) 20 September 2018 (2018-09-20) * paragraph [0013]; claim 37 * | 1-15 | |
| A | CN 111 833 280 A (UNIV SOUTHEAST) 27 October 2020 (2020-10-27) * the whole document * | 1-15 | |

-/--

The present search report has been drawn up for all claims

| Place of search | Date of completion of the search | Examiner |
|---|---|---|
| Munich | 14 January 2025 | Fischer, Jan |

EPO FORM 1503 03.82 (P04C01)

page 1 of 2

Europäisches Patentamt

European Patent Office

Office européen des brevets

# EUROPEAN SEARCH REPORT

| | | Application Number |
|---|---|---|
| | | **EP 24 38 2851** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SINGH VAIBHAV ET AL: "SelfieStick: Towards Earth Imaging from a Low-Cost Ground Module Using LEO Satellites", 2022 21ST ACM/IEEE INTERNATIONAL CONFERENCE ON INFORMATION PROCESSING IN SENSOR NETWORKS (IPSN), IEEE, 4 May 2022 (2022-05-04), pages 220-232, XP034151860, DOI: 10.1109/IPSN54338.2022.00025 [retrieved on 2022-07-18] * abstract * | 1-15 | |
| | ----- | | |
| A | CN 111 121 789 A (SHANGHAI AEROSPACE CONTROL TECH INST) 8 May 2020 (2020-05-08) * abstract * | 1-15 | |
| | ----- | | |

TECHNICAL FIELDS SEARCHED (IPC)

The present search report has been drawn up for all claims

| Place of search | Date of completion of the search | Examiner |
|---|---|---|
| Munich | 14 January 2025 | Fischer, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 38 2851

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2025

| Patent document cited in search report | | Publication date | Patent family member(s) | | Publication date |
|---|---|---|---|---|---|
| CN 115082310 | A | 20-09-2022 | NONE | | |
| CN 108090869 | B | 09-07-2021 | NONE | | |
| CN 110032963 | A | 19-07-2019 | NONE | | |
| US 2014043505 | A1 | 13-02-2014 | CA | 2826834 A1 | 16-08-2012 |
| | | | EP | 2673949 A1 | 18-12-2013 |
| | | | US | 2014043505 A1 | 13-02-2014 |
| | | | WO | 2012106797 A1 | 16-08-2012 |
| US 2018268239 | A1 | 20-09-2018 | US | 2014064554 A1 | 06-03-2014 |
| | | | US | 2018268239 A1 | 20-09-2018 |
| CN 111833280 | A | 27-10-2020 | NONE | | |
| CN 111121789 | A | 08-05-2020 | NONE | | |

EPO FORM P0459

For more details about this annex : see Official Journal of the European Patent Office, No. 12/82